# EUROPEAN PATENT SPECIFICATION

(11) **EP 4 030 078 B1**
(45) Date of publication and mention of the grant of the patent: **14.08.2024**
(21) Application number: 20786589.0
(22) Date of filing: 10.09.2020
(51) Int. Cl.: F16H 1/32, F16H 55/08

(54) **INTERNAL ENGAGEMENT TRANSMISSION MECHANISM**
MECHANISMUS ZUR ÜBERTRAGUNG EINES INNEREN EINGRIFFS
MÉCANISME DE TRANSMISSION À ENGRÈNEMENT INTERNE

(30) Priority: 12.09.2019 CN 201910866259; 17.02.2020 CN 202010095862; 17.02.2020 CN 202020176163 U
(43) Date of publication of application: 20.07.2022
(73) Proprietor: Ningbo HS-Power Drive Technology Co. Ltd., High Tech Zone Ningbo, Zhejiang 315048 (CN)
(72) Inventor: CHEN, Yuhao, Ningbo, Zhejiang 315048 (CN); FAN, Zhengfu, Ningbo, Zhejiang 315048 (CN)
(74) Representative: IP Sextant s.r.l.
(86) International application number: PCT/IB2020/058403
(87) International publication number: WO 2021/048775

(56) References cited:
- WO-A1-2016/172285
- JP-A- S6 026 860
- US-A- 1 516 591
- US-A- 4 922 781

## Description

### Technical Field

The present application relates to a transmission mechanism, and in particular to an internal engagement transmission mechanism.

### Background Art

An existing internal engagement transmission mechanism mainly has planetary gear transmission, harmonic transmission, cycloidal-pin wheel transmission, etc. The planetary gear transmission mainly uses involute gear engagement. Interference can be avoided in the case of large difference in the number of teeth between the outer wheel internal teeth and the inner wheel external teeth, and the single-stage transmission speed ratio is low. The harmonic transmission also uses involute gear engagement, which can achieve the engagement with one-tooth difference or two-teeth difference, but it is necessary to use a flexible gear as the inner wheel external teeth. The interference problem can be solved only through the deformation of the inner wheel external teeth. The flexible gear has a small load-bearing capacity and low impact resistance, such that it is difficult for harmonic transmission to be widely used. The cycloid transmission mainly uses a cycloid gear as the inner wheel. The internal engagement with one-tooth difference can be achieved through the engagement between the cycloidal profile on the cycloid gear and roller pins on the outer wheel, but the friction between the cycloid gear and the roller pin can only be reduced by means of providing a sliding sleeve bearing on each of the roller pins. The tooth profile engagement in all the transmissions mentioned above is line-contact engagement. During the engagement, the tooth surface contact stress is large, which is easy to cause wear or disengagement of tooth surface, and also results in low load-bearing capacity tooth surface. Document US 4922781 describes several embodiments of engagement mechanism comprising double cycloidal equidistant conjugated gear mechanisms

### Summary of the Invention

The present application provides an internal engagement transmission mechanism, comprising an outer wheel and an inner wheel. A first number of outer wheel internal teeth are provided on an inner edge of the outer wheel. Each of the outer wheel internal teeth comprises an outer wheel internal tooth top and outer wheel internal tooth waists symmetrical with respect to the outer wheel internal tooth top. Each of the outer wheel internal tooth waists comprises an engagement portion. A second number of inner wheel external teeth are provided on an outer edge of the inner wheel. Each of the inner wheel external teeth comprises an inner wheel external tooth top and inner wheel external tooth waists symmetrical with respect to the inner wheel external tooth top. Each of the inner wheel external tooth waists comprises an engagement portion, the first number being greater than the second number. The inner wheel is arranged inside the outer wheel and eccentrically rotates with respect to the outer wheel. The inner wheel and the outer wheel form internal engagement transmission via the engagement of the engagement portion of the inner wheel external tooth waist and the engagement portion of the outer wheel internal tooth waist. The engagement portion of the outer wheel internal tooth waist and the engagement portion of the inner wheel external tooth waist are curved surfaces which have the same shape and are overlapped, and the outer wheel internal tooth waist and the inner wheel external tooth waist are designed such that when the outer wheel and the inner wheel are in engagement transmission, at least one inner wheel external tooth in the inner wheel external teeth is capable of engaging with the outer wheel internal teeth, and for each of the inner wheel external teeth engaged with the outer wheel internal teeth, as the inner wheel eccentrically rotates, at least one of the inner wheel external tooth waists is capable of forming surface-contact engagement with the outer wheel internal tooth waist.

The present application provides a new tooth profile engagement, that is, the surface-contact engagement between the inner wheel external teeth and the outer wheel internal teeth. The surface-contact engagement is totally different from the traditional involutes engagement and it can achieve one-tooth difference transmission and the single-stage transmission speed ratio is high. Since the engagement between the inner wheel external teeth and the outer wheel internal teeth is surface-contact engagement, the internal engagement transmission mechanism can achieve smooth transmission, low noise, small tooth surface stress, long service life and good shock resistance.

Other features, advantages and embodiments of the present application may be elaborated or become apparent by considering the following specific embodiments, accompanying drawings and claims. In addition, it should be appreciated that the summary and the following specific embodiments are all exemplary, and are intended to provide a further explanation, but not to limit the scope of protection of the present application. However, the specific embodiments and specific examples merely indicate preferred embodiments of the present application.

### Brief Description of the Drawings

The features and advantages of the present application may be better understood by reading the following detailed description with reference to the accompanying drawings. In all the accompanying drawings, the same reference numerals represent the same parts, in the figures:
Fig. 1A is a partial sectional schematic diagram of an internal engagement transmission mechanism according to an embodiment of the present application;
Fig. 1B is a schematic diagram of the axial cross-section of the internal engagement transmission mechanism shown in Fig. 1A;
Fig. 2 is a schematic diagram of the engagement of an outer wheel and an inner wheel shown in Fig. 1A;
Fig. 3 is a structural schematic diagram of the outer wheel shown in Fig. 2;
Fig. 4 is a structural schematic diagram of the inner wheel shown in Fig. 2;
Fig. 5A shows a schematic diagram in which the outer wheel internal teeth and the inner wheel external teeth are in a non-engaged state;
Figs. 5B-5D show a schematic diagram in which outer wheel internal teeth and inner wheel external teeth are in a partial engaged state during the engagement;
Fig. 5E shows a schematic diagram in which inner wheel external teeth and outer wheel internal teeth are in a fully engaged state;
Figs. 5F-5H show a schematic diagram in which the inner wheel external teeth and the outer wheel internal teeth are in a partial engaged state during the disengagement;
Fig. 5I shows a schematic diagram in which the outer wheel internal teeth and the inner wheel external teeth are in a non-engaged state;
Fig. 6A is an enlarged view of a first specific product example of the outer wheel and the inner wheel shown in Fig. 2;
Fig. 6B is an enlarged view of a second specific product example of the outer wheel and the inner wheel shown in Fig. 2;
Fig. 6C is an enlarged view of a third specific product example of the outer wheel and the inner wheel shown in Fig. 2; and
Fig. 6D is an enlarged view of a fourth specific product example of the outer wheel and the inner wheel shown in Fig. 2.

### Detailed Description of Embodiments

Particular embodiments of the present application are described below with reference to the accompanying drawings which constitute part of this description. It should be understood that although the terms, such as "left", "right", "inner" and "outer", indicating orientations are used in the present application to describe various exemplary structural portions and elements in the present application, these terms are merely used herein for the purpose of easy illustration, and are determined based on the exemplary orientations as shown in the accompanying drawings. Since the embodiments disclosed in the present application can be arranged in different directions, these terms indicating directions are only illustrative and should not be considered as limitations. In the following accompanying drawings, the same reference numerals are used for the same components, and similar reference numerals are used for similar components.

The ordinal numbers such as "first" and "second" used in the present application are only used to distinguish and identify, and do not have any other meanings. Unless otherwise specified, the ordinal numbers neither indicate a specific order, nor have a specific relevance.

For example, the term "first flange" itself does not imply the existence of "second flange", and the term "second flange" itself does not imply the existence of "first flange".

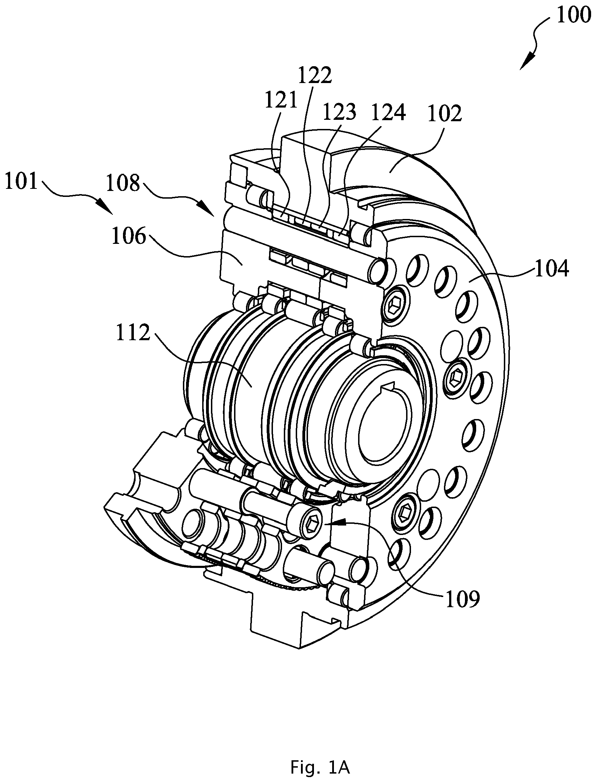

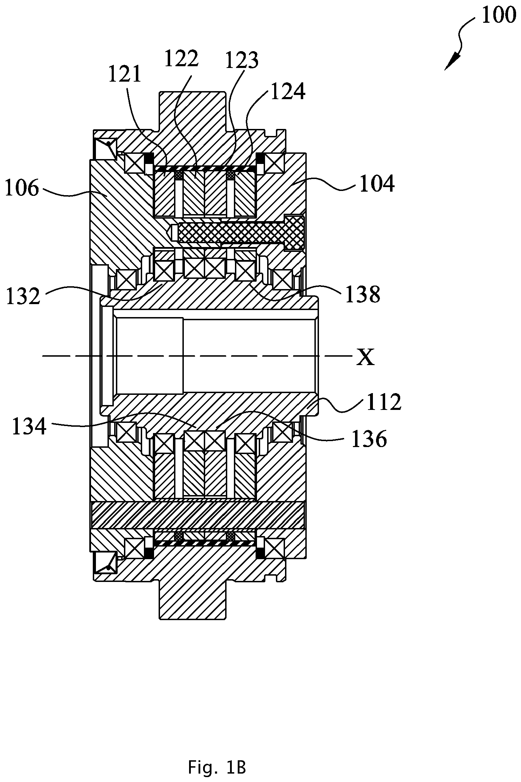

Fig. 1A is a partial sectional schematic diagram of an internal engagement transmission mechanism 100 according to an embodiment of the present application, and Fig. 1B is a schematic diagram of the axial cross-section of the internal engagement transmission mechanism 100 shown in Fig. 1A, showing the specific structure of components in the internal engagement transmission mechanism 100. As shown in Figs. 1A-1B, the internal engagement transmission mechanism 100 comprises an outer wheel 102, a planetary carrier 101, four inner wheels 121, 122, 123, 124 arranged side by side, and an eccentric shaft 112. The planetary carrier 101, the four inner wheels 121, 122, 123, 124 arranged side by side, and the eccentric shaft 112 are all arranged inside the outer wheel 102.

Specifically, the eccentric shaft 112 is a hollow shaft having a central axis X. The outer circumference of the eccentric shaft 112 is provided with four eccentric portions 132, 134, 136, 138. The eccentric portion 132 and the eccentric portion 138 are a group of eccentric sections having the same eccentric direction, and the eccentric portion 134 and the eccentric portion 136 are another group of eccentric sections having the same eccentric direction, with the difference between the eccentric directions of the two groups of eccentric sections being 180°. The four inner wheels 121, 122, 123, 124 are respectively sheathed on the four eccentric portions 132, 134, 136, 138 of the eccentric shaft 112 to form four inner wheels arranged in parallel, such that the four inner wheels 121, 122, 123, 124 can move in translation relative to the central axis X.

Outer edges of the four inner wheels 121, 122, 123, 124 are provided with inner wheel external teeth that are engaged with outer wheel internal teeth provided on an inner edge of the outer wheel 102. When the eccentric shaft 112 drives the four inner wheels 121, 122, 123, 124 to move in translation and the outer wheel 102 is fixed, the inner wheel external teeth are engaged with the outer wheel internal teeth of the outer wheel 102 such that the inner wheels 121, 122, 123, 124 rotate while moving in translation. In this way, the inner wheels 121, 122, 123, 124 can achieve rotation eccentrically (i.e., rotating while moving in translation). In other words, when the inner wheels 121, 122, 123, 124 rotate eccentrically, the central axes (not shown) of the inner wheels 121, 122, 123, 124 can rotate around the central axis X.

The planetary carrier 101 comprises a first flange 104, a second flange 106, a connecting component 109, and a transfer component 108. The four inner wheels 121, 122, 123, 124 are supported by the planetary carrier 101 and are clamped in the planetary carrier 101. The first flange 104 and the second flange 106 are respectively arranged on two sides of the inner wheels 121, 122, 123, 124. The first flange 104 and the second flange 106 are rigidly connected together via the connecting components 109 to hold the four inner wheels 121, 122, 123, 124 between the first flange 104 and the second flange 106. The transfer component 108 passes holes in the four inner wheels 121, 122, 123, 124 to connect the first flange 104 with the second flange 106. The transfer component 108 can transfer the motion of the inner wheels 121, 122, 123, 124 to the first flange 104 and the second flange 106 to drive the first flange 104 and the second flange 106 to rotate. It should be noted that since the first flange 104 and the second flange 106 are mounted on the outer wheel 102 via a bearing, the transfer component 108 drives the first flange 104 and the second flange 106 to rotate around the central axis X, rather than causing the first flange 104 and the second flange 106 to move in translation.

The internal engagement transmission mechanism 100 of the present application can achieve the purpose of acceleration or deceleration (i.e. speed reduction or speed increase). When it needs to achieve speed reduction, the four inner wheels 121, 122, 123, 124 move at a high speed, and the outer wheel 102 or the planetary carrier 101 moves at a low speed. When the outer wheel 102 serves as a torque output component (i.e., connected to a driven component), the planetary carrier 101 is necessarily fixed. When the planetary carrier 101 serves as a torque output component, the outer wheel 102 is necessarily fixed. When it needs to achieve speed increase, the outer wheel 102 or the planetary carrier 101 moves at a low speed, and the four inner wheels 121, 122, 123, 124 move at a high speed as torque output components. For ease of description, an example will be described below in which the four inner wheels 121, 122, 123, 124 move at a high speed, the outer wheel 102 is fixed, and the planetary carrier 101 moves at a low speed as a torque output component. The power transmission relationship is substantially described as follows:
The eccentric shaft 112 of the transmission mechanism 100 is connected to a driving mechanism (not shown). The driving mechanism drives the eccentric shaft 112 to rotate. Since the outer wheel 102 is fixed, and the engagement relationship between the outer wheel internal teeth of the outer wheel 102 and the inner wheel external teeth of the inner wheels 121, 122, 123, 124, the rotation of the eccentric shaft 112 can drive the inner wheels 121, 122, 123, 124 sheathed thereon to move in translation and rotate. The transfer component 108 transfers the rotation and torque of the inner wheels 121, 122, 123, 124 to the first flange 104 and the second flange 106 and drives the first flange 104 and the second flange 106 to rotate. The first flange 104 and the second flange 106 are connected to a driven device (not shown) to implement speed change and torque output.

Since the four inner wheels 121, 122, 123, 124 have a similar structure, the inner wheel 121 is taken as an example to describe below the structural relationship between the inner wheel external teeth of the inner wheel 121 and the outer wheel internal teeth of the outer wheel 102:

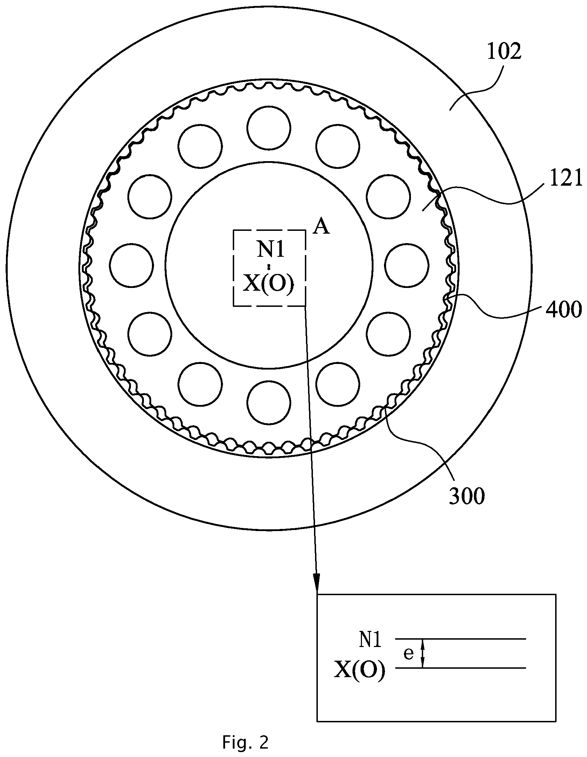

Fig. 2 is a schematic diagram of the engagement of the outer wheel 102 and the inner wheel 121 shown in Fig. 1A. As shown in Fig. 2, the outer wheel 102 has a central axis O. The central axis O is coaxially arranged with the central axis X of the eccentric shaft 112. The inner wheel 121 is eccentrically arranged in the outer wheel 102. Specifically, the inner wheel 121 has a central axis N1. The central axis N1 is arranged in parallel with the central axis O of the outer wheel 102, with the distance therebetween being e. The eccentricity e is greater than zero (see the enlarged view of the dashed box A). The inner edge of the outer wheel 102 is provided with a first number of outer wheel internal teeth 300. The outer edge of the inner wheel 121 is provided with a second number of inner wheel external teeth 400. The first number is greater than the second number.

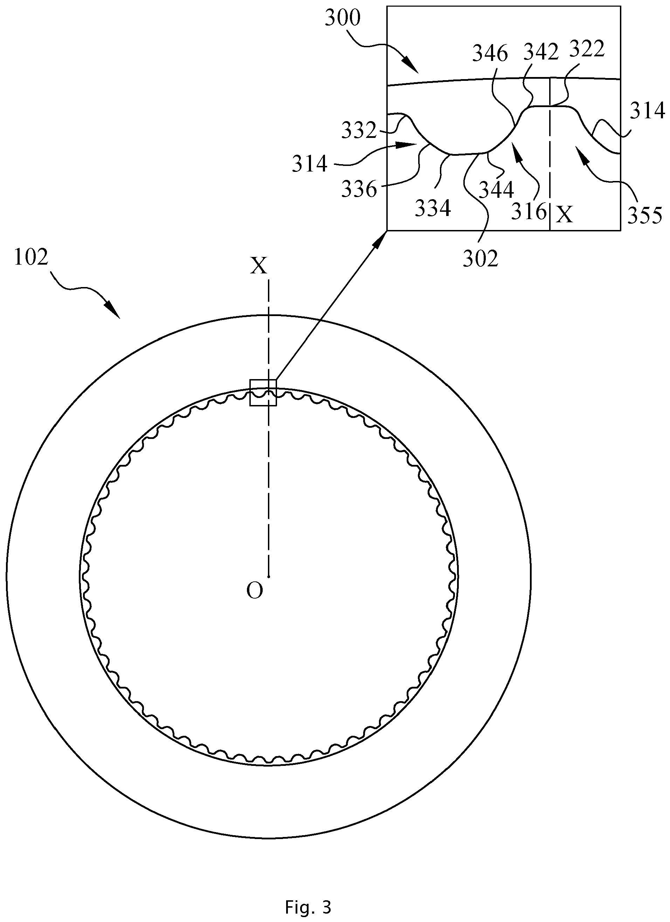

Fig. 3 is a structural schematic diagram of the outer wheel 102 shown in Fig. 2. As shown in Fig. 3, the outer wheel 102 is a spur gear. The first number of outer wheel internal teeth 300 are arranged around the inner edge of the outer wheel 102. Each of the outer wheel internal teeth 300 has the same structure. The two adjacent outer wheel internal teeth 300 are connected to each other via an outer wheel internal tooth base 322.

Each of the outer wheel internal teeth 300 comprises an outer wheel internal tooth top 302 and two outer wheel internal tooth waists 314, 316. In the radial cross-section of the outer wheel 102, the outer wheel internal tooth top 302 is a smooth curve or straight line. The two outer wheel internal tooth waists 314, 316 are respectively located on two sides of the outer wheel internal tooth top 302 . The two outer wheel internal tooth waists 314, 316 are symmetrically arranged with respect to the outer wheel internal tooth top 302, and are completely symmetrical and identical. Specifically, the outer wheel internal tooth waist 314 is located on the left side of the outer wheel internal tooth top 302, and the outer wheel internal tooth waist 316 is located on the right side of the outer wheel internal tooth top 302.

For the outer wheel internal tooth waist 314 on the left side, the outer wheel internal tooth waist 314 comprises an engagement section 336 (i.e., an engagement portion 336), a transition section 332, and a transition section 334. The engagement section 336 can form surface contact with the inner wheel external teeth 400 during the engagement. The transition section 332 is configured such that the engagement section 336 is connected to the outer wheel internal tooth base 322. The transition section 334 is configured such that the engagement section 336 is connected to the outer wheel internal tooth top 302. In the radial cross-section of the outer wheel 102, the transition section 332 and the transition section 334 are a smooth curve or straight line, the engagement section 336 is a smooth curve, and the direction of curve of the engagement section 336 protrudes toward the outside of teeth. In other words, the direction of curve of the engagement section 336 protrudes toward the central axis O of the outer wheel 102. The outer wheel internal tooth waist 314 is configured such that, when the outer wheel 102 is engaged with the inner wheel 121, the transition section 332 and the transition section 334 do not contact with the inner wheel 121.

Similarly, for the outer wheel internal tooth waist 316 on the right side, the outer wheel internal tooth waist 316 comprises an engagement section 346 (i.e., an engagement portion 346), a transition section 342, and a transition section 344. The engagement section 346 can form surface contact with the inner wheel external teeth 400 during the engagement. The transition section 342 is configured such that the engagement section 346 is connected to the outer wheel internal tooth base 322. The transition section 344 is configured such that the engagement section 346 is connected to the outer wheel internal tooth top 302. In the radial cross-section of the outer wheel 102, the transition section 342 and the transition section 344 are a smooth curve or straight line, the engagement section 346 is a smooth curve, and the direction of curve of the engagement section 346 protrudes toward the outside of teeth. In other words, the direction of curve of the engagement section 346 protrudes toward the central axis O of the outer wheel 102. The outer wheel internal tooth waist 316 is configured such that, when the outer wheel 102 is engaged with the inner wheel 121, the transition section 342 and the transition section 344 do not contact with the inner wheel 121.

A recess 355 is formed between the adjacent outer wheel internal tooth 300 and outer wheel internal tooth 300 for receiving the inner wheel external tooth 400. More specifically, the recess 355 is formed by the outer wheel internal tooth waist 316, the outer wheel internal tooth base 322 of the outer wheel internal tooth 300 and the outer wheel internal tooth waist 314 of the adjacent outer wheel internal tooth 300. The outer wheel internal tooth waist 316 and the outer wheel internal tooth waist 314 on two sides of the recess 355 are symmetrical with respect to the outer wheel internal tooth center line X. The outer wheel internal tooth center line X of each recess 355 pass through the central axis O of the outer wheel 102 and the midpoint of the outer wheel internal tooth base 322 that forms the recess 355. The engagement relationship of the outer wheel internal teeth 300 and the inner wheel external teeth 400 will be specifically illustrated below.

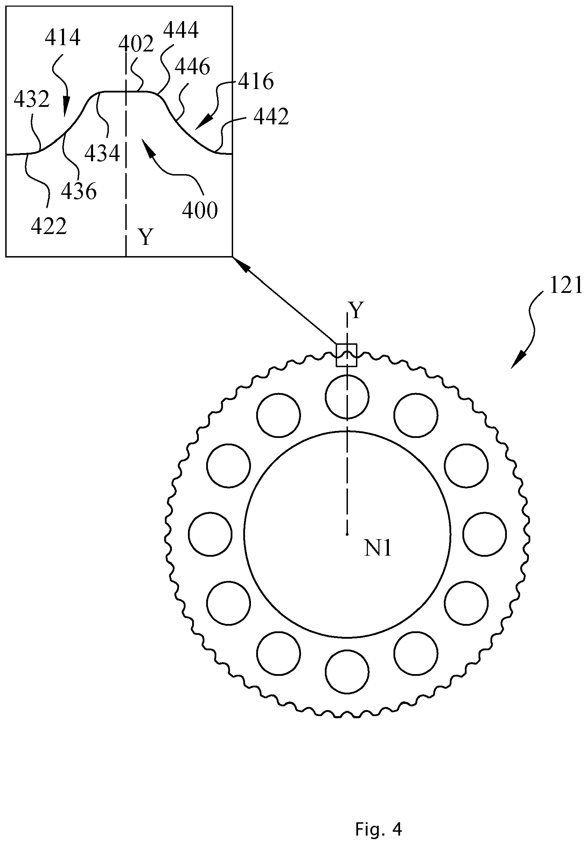

Fig. 4 is a structural schematic diagram of the inner wheel 121 shown in Fig. 2. As shown in Fig. 4, the inner wheel 121 is also a spur gear. A second number of inner wheel external teeth 400 are provided around the outer edge of the inner wheel 121. Each of the inner wheel external teeth 400 has the same structure. The two adjacent inner wheel external teeth 400 are connected to each other via an inner wheel external tooth base 422.

Each of the inner wheel external teeth 400 comprises an inner wheel external tooth top 402 and two inner wheel external tooth waists 414, 416. In the radial cross-section of the inner wheel 121, the inner wheel external tooth top 402 is a smooth curved surface or a straight line. Two inner wheel external tooth waists 414, 416 are respectively located on two sides of the inner wheel external tooth top 402. Two inner wheel external tooth waists 414, 416 are symmetrically arranged with respect to the inner wheel external tooth top 402 and are completely symmetrical and identical. Specifically, the inner wheel external tooth waist 414 is located on the left side of the inner wheel external tooth top 402, and the inner wheel external tooth waist 416 is located on the right side of the inner wheel external tooth top 402.

For the inner wheel external tooth waist 414 on the left side, the inner wheel external tooth waist 414 comprises an engagement section 436 (i.e., an engagement portion 436), a transition section 432 and a transition section 434. The engagement section 436 can form surface contact with the outer wheel internal teeth 300 during the engagement. The transition section 432 is configured such that the engagement section 436 is connected to the inner wheel external tooth base 422. The transition section 434 is configured such that the engagement section 436 is connected to the inner wheel external tooth top 402. In the radial cross-section of the outer wheel 102, the transition section 432 and the transition section 434 are a smooth curve or straight line, the engagement section 436 is a smooth curve, and the direction of curve of the engagement section 436 recesses toward the inside of teeth. In other words, the direction of curve of the engagement section 436 recesses toward the central axis N1 of the inner wheel 121. Also, the shape of the curved surface of the engagement section 436 is the same as and coincides with the shape of the curved surface of the engagement section 346. In other words, the shape of the curved surface of the engagement section 436 can be complementary with the shape of the curved surface of the engagement section 346. The inner wheel external tooth waist 414 is configured such that, when the outer wheel 102 is engaged with the inner wheel 121, the transition section 432 and the transition section 434 do not contact with the outer wheel 102.

Similarly, for the inner wheel external tooth waist 416 on the right side, the inner wheel external tooth waist 416 comprises an engagement section 446 (i.e., an engagement portion 446), a transition section 442 and a transition section 444. The engagement section 446 can form surface contact with the outer wheel internal teeth 300 during the engagement. The transition section 442 is configured such that the engagement section 446 is connected to the inner wheel external tooth base 422. The transition section 444 is configured such that the engagement section 446 is connected to the inner wheel external tooth top 402. In the radial cross-section of the outer wheel 102, the transition section 442 and the transition section 444 are a smooth curve or straight line, the engagement section 446 is a smooth curve, and the direction of curve of the engagement section 446recesses toward the inside of teeth. In other words, the direction of curve of the engagement section 446 recesses toward the central axis N1 of the inner wheel 121. Also, the shape of the curved surface of the engagement section 446 is the same as and coincides with the shape of the curved surface of the engagement section 336. In other words, the shape of the curved surface of the engagement section 446 can be complementary with the shape of the curved surface of the engagement section 336. The inner wheel external tooth waist 416 is configured such that, when the outer wheel 102 is engaged with the inner wheel 121, the transition section 442 and the transition section 444 do not contact with the outer wheel 102. The inner wheel external tooth waist 414 and the inner wheel external tooth waist 416 of each of the inner wheel external teeth 400 are symmetrical with respect to the center line Y of the inner wheel external teeth. The inner wheel external tooth center line Y passes through the central axis N1 of the inner wheel 121 and the midpoint of the inner wheel external tooth top 402.

It should be noted that, in the radial cross-section of the outer wheel 102, the engagement section 336, the engagement section 346, the engagement section 436 and the engagement section 446 in the present application are not involutes.

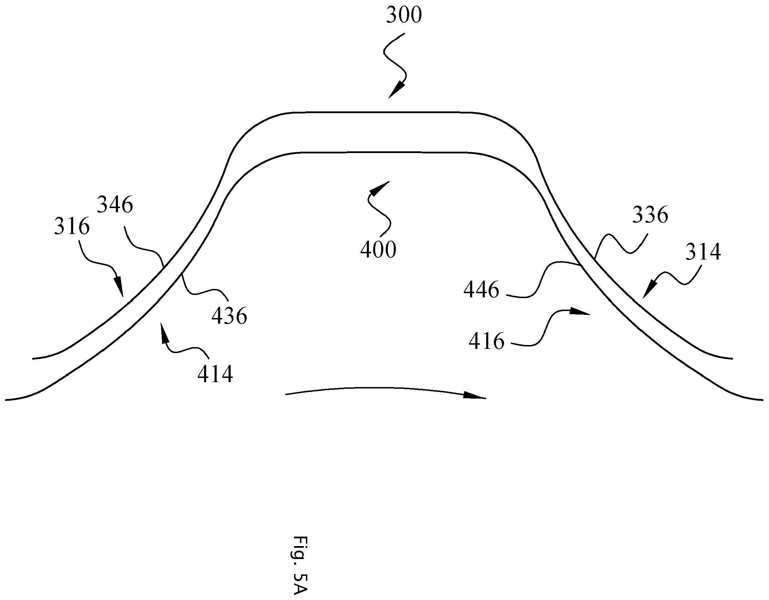

The engaged state of the outer wheel 102 and the inner wheel 121 will be described below with reference to Figs. 2 to 4. Specifically, when the inner wheel 121 moves relative to the outer wheel 102, i.e., when the inner wheel 121 eccentrically rotates (moves in translation and rotates) in the outer wheel 102, the engaged state of the inner wheel external teeth 400 of the inner wheel 121 and the outer wheel internal teeth 300 of the outer wheel 102 includes a partial engaged state and a fully engaged state. For any inner wheel external tooth 400 of the inner wheel 121, the inner wheel external teeth 400 is in the fully engaged state when the outer wheel internal tooth center line X coincides with the inner wheel external tooth center line Y Before and after the fully engaged state, the inner wheel external teeth 400 are in the partial engaged state. The change of any inner wheel external tooth 400 of the inner wheel 121 from the non-engaged state (or the disengaged state), to the partial engaged state, to the fully engaged state, then to the partial engaged state, and to the non-engaged state (i.e., the disengaged state) will be specifically described in Figs. 5A-5I.

It should also be noted that, for the outer wheel 102 and the inner wheel 121 in the present application, at least one inner wheel external tooth 400 and outer wheel internal tooth 300 are engaged at any time. As an example, the outer wheel 102 and the inner wheel 121 are designed such that at any time, only one inner wheel external tooth 400 is engaged with the outer wheel internal teeth 300, and other inner wheel external teeth 400 are all not engaged with the outer wheel internal teeth 300. As another example, the outer wheel 102 and the inner wheel 121 are designed such that at any time, three adjacent inner wheel external teeth 400 are engaged with the outer wheel internal teeth 300, and other inner wheel external teeth 400 are not engaged with the outer wheel internal teeth 300.

The engagement and disengagement process of the change of the inner wheel external teeth 400 of the inner wheel 121 and the outer wheel internal teeth 300 from the non-engaged state (or the disengaged state), to the partial engaged state, to the fully engaged state, then to the partial engaged state, and to the non-engaged state (or the disengaged state) will be described below with reference to Figs. 5A-5I. During the engagement shown in Figs. 5A-5I, the inner wheel external teeth 400 and the outer wheel internal teeth 300 form a relative movement. In this embodiment, the outer wheel internal teeth 300 remain fixed, and the inner wheel eccentrically rotates clockwise (as shown by the arrow in Fig. 5A) in the outer wheel 102 (i.e., rotating counterclockwise while moving in translation clockwise). It should be understood by those skilled in the art that the process described in Figs. 5A-5I in which the inner wheel external teeth 400 of the inner wheel 121 gradually come into contact with the outer wheel internal teeth 300, the contact portion gradually increases to fully engagement, and then the contact portion gradually decreases until the separation can be observed during the relative high-speed rotation of the inner wheel external teeth 400 and the outer wheel internal teeth 300 by means of the technique of high-speed photography. It should be noted that this process is a continuous process. In this application, for ease of description, the contact portion in this dynamic continuous process is specifically described in different time periods. Those skilled in the art could understand that Figs. 5A-5I are radial cross-sectional views of the inner wheel external teeth 400 and the outer wheel internal teeth 300. In the radial cross-sectional views, the line contact between the inner wheel external teeth 400 and the outer wheel internal teeth 300 is represented by schematic point contact, and in the radial cross-sectional views the surface contact between the inner wheel external teeth 400 and the outer wheel internal teeth 300 is represented by schematic line contact.

Fig. 5A shows a schematic diagram in which the outer wheel internal tooth 300 and the inner wheel external tooth 400 are in a non-engaged state (i.e., disengaged or separated from each other). It can be seen from Fig. 5A that the outer wheel internal tooth 300 are not in contact with the inner wheel external tooth 400. More specifically, the engagement section 436 of the inner wheel external tooth waist 414 are not in contact with the engagement section 346 of the outer wheel internal tooth waist 316 and the engagement section 446 of the inner wheel external tooth waist 416 are not in contact with the engagement section 336 of the outer wheel internal tooth waist 314.

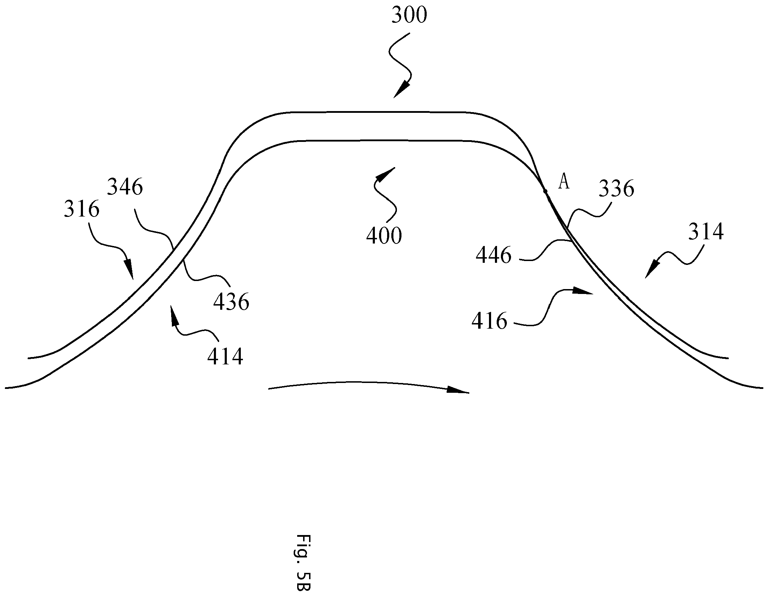

Figs. 5B-5D show schematic diagrams in which the outer wheel internal tooth 300 and the inner wheel external tooth 400 are in the partial engaged state during the engagement. For the inner wheel external tooth waist 414 on the left side of the inner wheel external tooth 400 and the outer wheel internal tooth waist 316 on the left side of the outer wheel internal tooth 300, during the process from the state shown in Fig. 5A to the state shown in Fig. 5B, as the inner wheel continues to eccentrically rotate clockwise in the outer wheel 102, the distance between the engagement section 436 and the engagement section 346 gradually decreases compared to the state shown in Fig. 5A, but the inner wheel external tooth waist 414 is still not in contact with the outer wheel internal tooth waist 316 on the left side of the outer wheel internal tooth 300.

For the inner wheel external tooth waist 416 on the right side of the inner wheel external tooth 400 and the outer wheel internal tooth waist 314 on the right side of the outer wheel internal tooth 300, during the process from the state shown in Fig. 5A to the state shown in Fig. 5B, the engagement section 446 gradually gets close to the engagement section 336 until the engagement section 446 and the engagement section 336 begin to form a contact portion as shown in Fig. 5 B. The contact portion may be line contact, and may also be surface contact. More specifically, the contact portion is located or substantially located at the top the engagement section 446 and at the upper portion of the engagement section 336. The projection of the contact portion in the radial cross-section thereof is shown as a contact site (or contact point) A.

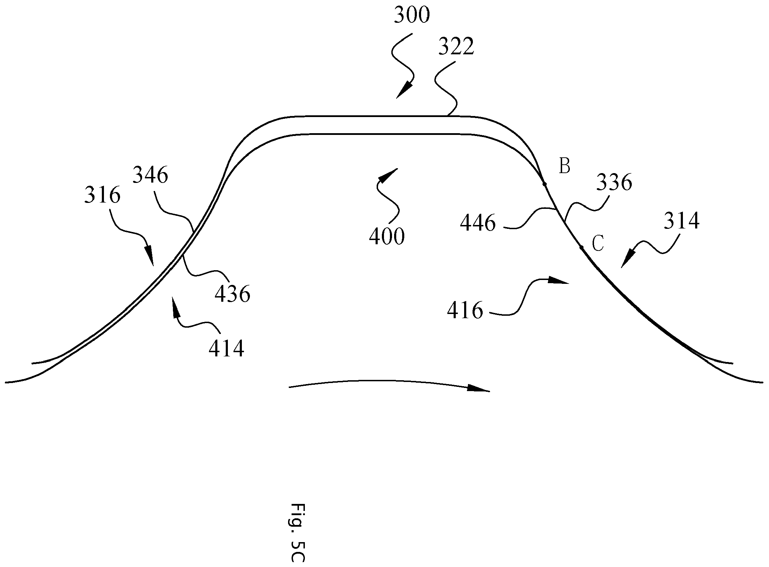

For the inner wheel external tooth waist 414 on the left side of the inner wheel external tooth 400 and the outer wheel internal tooth waist 316 on the left side of the outer wheel internal tooth 300, during the process from the state shown in Fig. 5B to the state shown in Fig. 5C, the distance between the engagement section 436 and the engagement section 346 continues to gradually decrease, but the engagement section 436 is still not in contact with the engagement section 346. Compared with the state shown in Fig. 5B, in the state shown in Fig. 5C, the engagement section 436 is closer to the engagement section 346.

For the inner wheel external tooth waist 416 on the right side of the inner wheel external tooth 400 and the outer wheel internal tooth waist 314 on the right side of the outer wheel internal tooth 300, during the process from the state shown in Fig. 5B to the state shown in Fig. 5C, the contact area of the contact portion between the engagement section 446 and the engagement section 336 gradually increases. In the state shown in Fig. 5C, the projection of the contact portion between the engagement section 446 and the engagement section 336 in the radial cross-section thereof is a line segment B-C. More specifically, during the process from the state shown in Fig. 5B to the state shown in Fig. 5C, the contact portion between the engagement section 446 and the engagement section 336 gradually increases, which may be an increase in the contact surface, or may change from the line contact to the surface contact. Also, such surface contact is not caused due to the deformation by force between the gears, but is achieved by the engagement section 446 and the engagement section 336 being configured to be curved surfaces which have the same shape and are overlapped. During the process in which the contact portion (or area) between the engagement section 446 and the engagement section 336 gradually increases, the inner wheel external tooth 400 move upward relative to the outer wheel internal tooth 300 such that the engagement section 446 moves upward relative to the engagement section 336. At this time, the contact site (or contact point) B is substantially located at the top of the engagement section 446 and at the upper portion of the engagement section 336, but the position thereof on the engagement section 336 is closer to the outer wheel internal tooth base 322 than the previous contact site (or contact point) A shown in Fig. 5B.

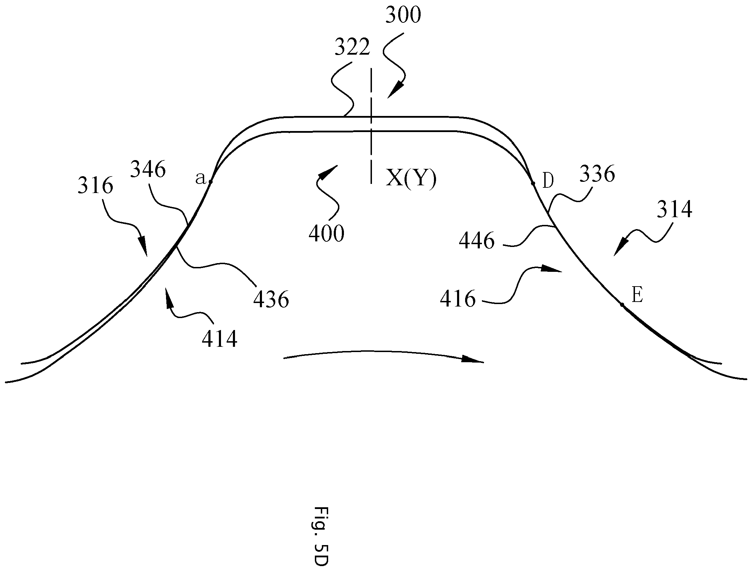

For the inner wheel external tooth waist 414 on the left side of the inner wheel external tooth 400 and the outer wheel internal tooth waist 316 on the left side of the outer wheel internal tooth 300, during the process from the state shown in Fig. 5C to the state shown in Fig. 5D, the engagement section 436 gradually gets close to the engagement section 346 such that the engagement section 436 and the engagement section 346 form a contact portion in the state as shown in Fig. 5D. More specifically, the contact portion is located or substantially located at the top the engagement section 436 and at the upper portion of the engagement section 346. The projection of the contact portion in the radial cross-section thereof is shown as a contact site (or contact point) a.

For the inner wheel external tooth waist 416 on the right side of the inner wheel external tooth 400 and the outer wheel internal tooth waist 314 on the right side of the outer wheel internal tooth 300, during the process from the state shown in Fig. 5C to the state shown in Fig. 5D, the contact area of the contact portion between the engagement section 446 and the engagement section 336 continues to gradually increase. In the state shown in Fig. 5D, the projection of the contact surface of the contact portion between the engagement section 446 and the engagement section 336 in the radial cross-section thereof is a line segment D-E. More specifically, during the process from the state shown in Fig. 5C to the state shown in Fig. 5D, the contact area of the contact portion between the engagement section 446 and the engagement section 336 continues to gradually increase, and the inner wheel external tooth 400 continues to move upward relative to the outer wheel internal tooth 300 such that the engagement section 446 moves upward relative to the engagement section 336. At this time, the contact site (or contact point) D is substantially located at the top of the engagement section 446 and at the upper portion of the engagement section 336, but the position thereof on the engagement section 336 is closer to the outer wheel internal tooth base 322 than the previous contact site (or contact point) B shown in Fig. 5C.

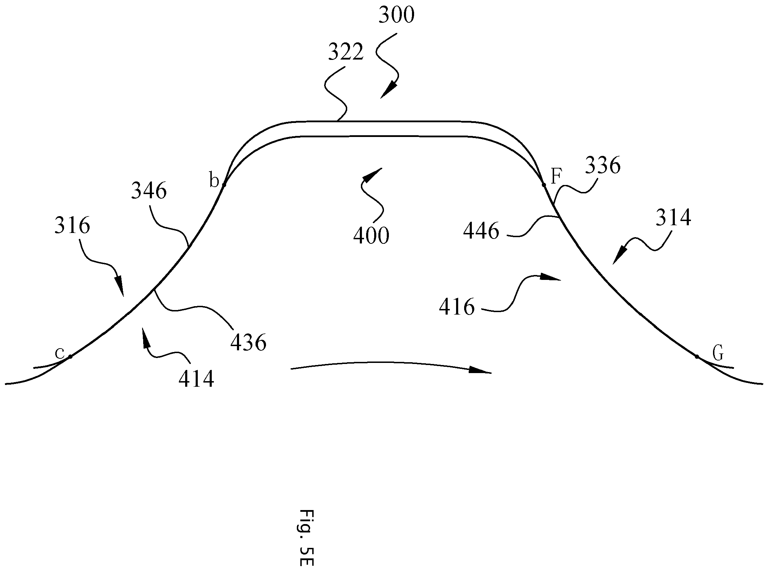

Fig. 5E shows a schematic diagram in which inner wheel external tooth 400 and outer wheel internal tooth 300 are in a fully engaged state. For the inner wheel external tooth waist 414 on the left side of the inner wheel external tooth 400 and the outer wheel internal tooth waist 316 on the left side of the outer wheel internal tooth 300, during the process from the state shown in Fig. 5D to the state shown in Fig. 5E, as the inner wheel continues to eccentrically rotate clockwise in the outer wheel 102, the contact area of the contact portion between the engagement section 436 and the engagement section 346 gradually increases. In the state shown in Fig. 5E, the projection of the contact portion between the engagement section 436 and the engagement section 346 in the radial cross-section thereof is a line segment b-c. At this time, the engagement section 436 coincides with the engagement section 346. More specifically, during the process from the state shown in Fig. 5D to the state shown in Fig. 5E, the contact portion between the engagement section 436 and the engagement section 346 gradually increases, which may be an increase in the contact surface, or may change from the line contact to the surface contact. Also, such surface contact is not caused due to the deformation by force between the gears, but is achieved by the engagement section 436 and the engagement section 346 being configured to be curved surfaces which have the same shape and are overlapped. During the eccentric rotation of the inner wheel external tooth 400 relative to the outer wheel internal tooth 300, the engagement section 436 moves upward relative to the engagement section 346 until the contact site (or contact point) b is located at the tops of the engagement section 436 and the engagement section 346, and the contact site (or contact point) c is located at the bottoms of the engagement section 436 and the engagement section 346. At this time, the engagement section 436 and the engagement section 346 are overlapped (engaged) together.

For the inner wheel external tooth waist 416 on the right side of the inner wheel external tooth 400 and the outer wheel internal tooth waist 314 on the right side of the outer wheel internal tooth 300, during the process from the state shown in Fig. 5D to the state shown in Fig. 5E, the contact area of the contact portion between the engagement section 446 and the engagement section 336 also continues to gradually increase. In the state shown in Fig. 5E, the projection of the contact portion between the engagement section 446 and the engagement section 336 in the radial cross-section thereof is a line segment F-G. At this time, the engagement section 446 coincides with the engagement section 336. More specifically, during the process from the state shown in Fig. 5D to the state shown in Fig. 5E, the inner wheel external tooth 400 continues to move upward relative to the outer wheel internal tooth 300 until the contact site (or contact point) F is located at the tops of the engagement section 446 and the engagement section 336, and the contact site (or contact point) G is located at the bottoms of the engagement section 446 and the engagement section 336. At this time, the engagement section 446 and the engagement section 336 are overlapped (engaged) together.

In this way, in the state as shown in Fig. 5E, when the engagement section 436 and the engagement section 346 are overlapped (engaged) together and the engagement section 446 and the engagement section 336 are overlapped (engaged) together, the outer wheel internal tooth center line X coincides with the inner wheel external tooth center line Y, and the inner wheel external tooth 400 and the outer wheel internal tooth 300 are in the fully engaged state.

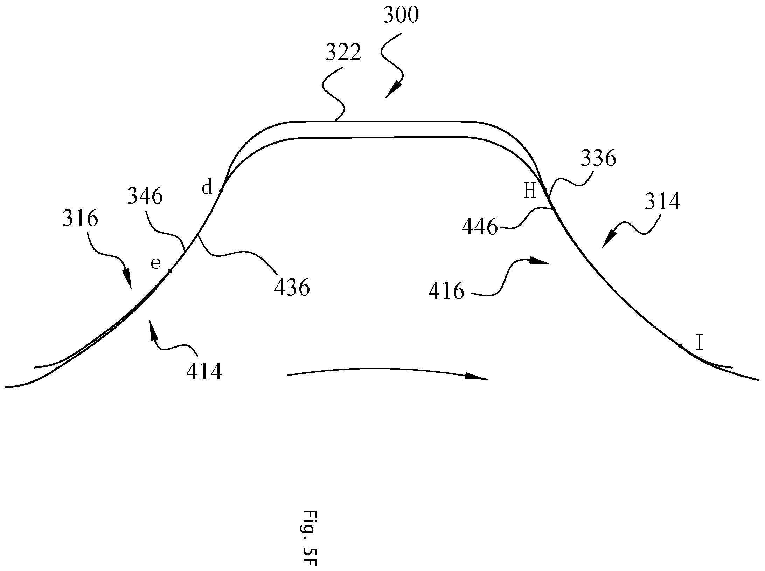

Figs. 5F-5H show a schematic diagram in which the inner wheel external tooth 400 and the outer wheel internal tooth 300 are in a partial engaged state during the disengagement. For the inner wheel external tooth waist 414 on the left side of the inner wheel external tooth 400 and the outer wheel internal tooth waist 316 on the left side of the outer wheel internal tooth 300, during the process from the state shown in Fig. 5E to the state shown in Fig. 5F, as the inner wheel continues to eccentrically rotate clockwise in the outer wheel 102, the lower portions of the engagement section 436 and the engagement section 346 begin to disengage, such that the contact area of the contact portion between the inner wheel external tooth waist 414 and the outer wheel internal tooth waist 316 gradually decreases. In the state shown in Fig. 5F, the projection of the contact portion between the engagement section 436 and the engagement section 346 in the radial cross-section thereof is a line segment d-e. More specifically, during the process from the state shown in Fig. 5E to the state shown in Fig. 5F, the inner wheel external tooth 400 move downward relative to the outer wheel internal tooth 300 such that the engagement section 436 moves downward relative to the engagement section 346. At this time, the contact site (or contact point) d is substantially located at the upper portions of the engagement section 436 and the engagement section 346, but the position thereof on the engagement section 346 is farther from the outer wheel internal tooth base 322 than the previous contact site (or contact point) b shown in Fig. 5E. The contact site (or contact point) e is substantially located at the middle portions of the engagement section 436 and the engagement section 346, and is closer to the outer wheel internal tooth base 322 than the previous contact site (or contact point) c shown in Fig. 5E.

For the inner wheel external tooth waist 416 on the right side of the inner wheel external tooth 400 and the outer wheel internal tooth waist 314 on the right side of the outer wheel internal tooth 300, during the process from the state shown in Fig. 5E to the state shown in Fig. 5F, as the inner wheel continues to eccentrically rotate clockwise in the outer wheel 102, the lower portions of the engagement section 336 and the engagement section 446 begin to disengage such that the contact area of the contact portion between the engagement section 336 and the engagement section 446 gradually decreases. In the state shown in Fig. 5F, the projection of the contact portion between the engagement section 336 and the engagement section 446 in the radial cross-section thereof is a line segment H-I. More specifically, during the process from the state shown in Fig. 5E to the state shown in Fig. 5F, the inner wheel external tooth 400 move downward relative to the outer wheel internal tooth 300 such that the engagement section 446 moves downward relative to the engagement section 336. At this time, the contact site (or contact point) H is substantially located at the upper portions of the engagement section 336 and the engagement section 446, but the position thereof on the engagement section 446 is farther from the outer wheel internal tooth base 322 than the previous contact site (or contact point) G shown in Fig. 5E. The contact site (or contact point) I is substantially located at the lower portions of the engagement section 336 and the engagement section 446, and is closer to the outer wheel internal tooth base 322 than the previous contact site (or contact point) G shown in Fig. 5E.

It should also be noted that since the inner wheel continues to eccentrically rotate clockwise in the outer wheel 102, the disengagement between the engagement section 436 and the engagement section 346 is greater than the disengagement between the engagement section 336 and the engagement section 446. In other words, the contact area of the contact portion between the engagement section 436 and the engagement section 346 is smaller than the contact area between the engagement section 336 and the engagement section 446. That is to say, the contact site (or contact point) e is closer to the outer wheel internal tooth base 322 than the contact site (or contact point) I.

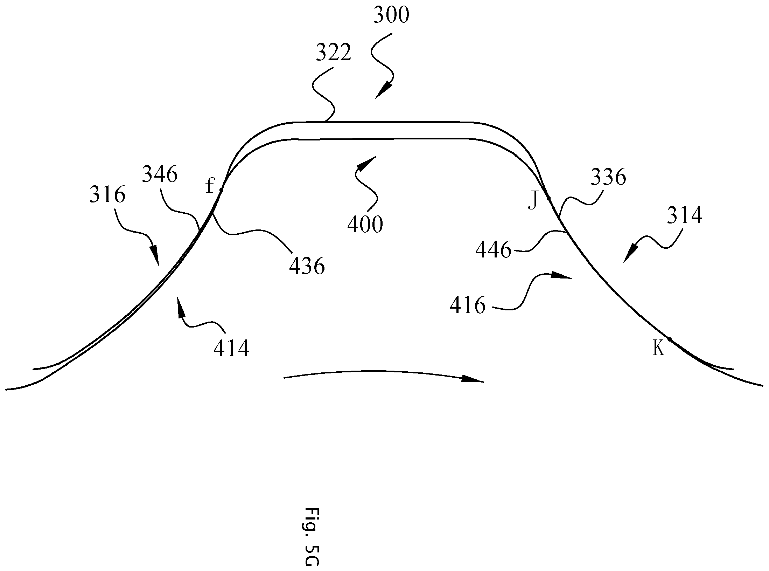

For the inner wheel external tooth waist 414 on the left side of the inner wheel external tooth 400 and the outer wheel internal tooth waist 316 on the left side of the outer wheel internal tooth 300, during the process from the state shown in Fig. 5F to the state shown in Fig. 5G, as the inner wheel continues to eccentrically rotate clockwise in the outer wheel 102, the lower portions of the engagement section 436 and the engagement section 346 continue to disengage such that the contact area of the contact portion between the engagement section 436 and the engagement section 346 gradually decreases until the contact portion is substantially located at the top of the engagement section 436 and at the upper portion of the engagement section 346 as shown in Fig. 5G,. The projection of the contact portion (or contact line) in the radial cross-section thereof is shown as a contact site (or contact point) f.

For the inner wheel external tooth waist 416 on the right side of the inner wheel external tooth 400 and the outer wheel internal tooth waist 314 on the right side of the outer wheel internal tooth 300, during the process from the state shown in Fig. 5F to the state shown in Fig. 5G, as the inner wheel continues to eccentrically rotate clockwise in the outer wheel 102, the lower portions of the engagement section 336 and the engagement section 446 continue to disengage such that the contact area of the contact portion between the engagement section 336 and the engagement section 446 continues to gradually decrease. In the state shown in Fig. 5G, the projection of the contact portion between the engagement section 336 and the engagement section 446 in the radial cross-section thereof is a line segment J-K. More specifically, during the process from the state shown in Fig. 5F to the state shown in Fig. 5G, the inner wheel external tooth 400 move downward relative to the outer wheel internal tooth 300 such that the engagement section 446 moves downward relative to the engagement section 336. At this time, the contact site (or contact point) J is substantially located at the upper portions of the engagement section 336 and the engagement section 446, but the position thereof on the engagement section 336 is farther from the outer wheel internal tooth base 322 than the previous contact site (or contact point) H shown in Fig. 5F. The contact site (or contact point) K is substantially located at the lower portions of the engagement section 336 and the engagement section 446, but the position thereof on the engagement section 336 is closer to the outer wheel internal tooth base 322 than the previous contact site (or contact point) I shown in Fig. 5F.

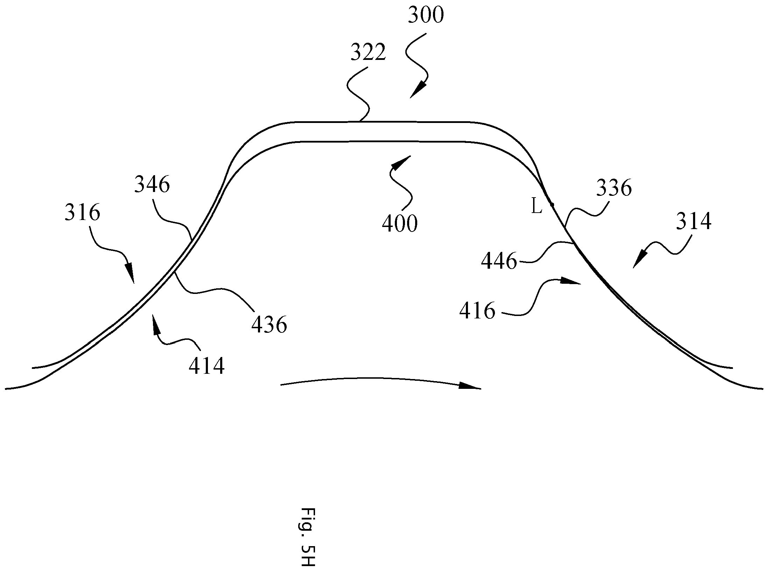

For the inner wheel external tooth waist 414 on the left side of the inner wheel external tooth 400 and the outer wheel internal tooth waist 316 on the left side of the outer wheel internal tooth 300, during the process from the state shown in Fig. 5G to the state shown in Fig. 5H, as the inner wheel continues to eccentrically rotate clockwise in the outer wheel 102, the lower portions of the engagement section 436 and the engagement section 346 continue to disengage until the engagement section 436 and the engagement section 346 are not in contact with each other as shown in Fig. 5H.

For the inner wheel external tooth waist 416 on the right side of the inner wheel external tooth 400 and the outer wheel internal tooth waist 314 on the right side of the outer wheel internal tooth 300, during the process shown in the state shown in Fig. 5G to the state shown in Fig. 5H, as the inner wheel continues to eccentrically rotate clockwise in the outer wheel 102, the lower portions of the engagement section 336 and the engagement section 446 continue to disengage. More specifically, the contact portion is substantially located at the upper portions of the engagement section 336 and the engagement section 446. The projection of the contact in the radial cross-section thereof is shown as a contact site (or contact point) L.

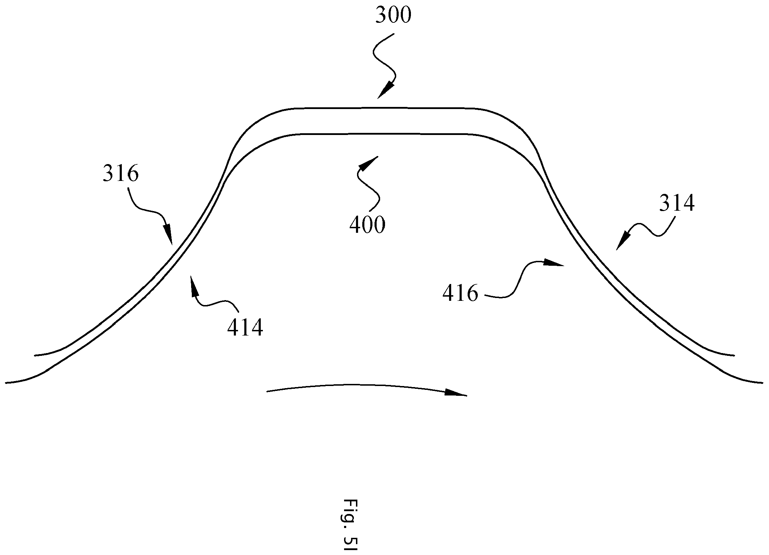

Fig. 5I shows a schematic diagram in which the outer wheel internal tooth 300 and the inner wheel external tooth 400 are in a non-engaged state (i.e., disengaged from each other). For the inner wheel external tooth waist 414 on the left side of the inner wheel external tooth 400 and the outer wheel internal tooth waist 316 on the left side of the outer wheel internal tooth 300, during the process from the state shown in Fig. 5H to the state shown in Fig. 5I, as the inner wheel continues to eccentrically rotate clockwise in the outer wheel 102, the engagement section 436 remains out of contact with the engagement section 346 , and the distance between the engagement section 436 and the engagement section 346 gradually increases. During the process from the state shown in Fig. 5H to the state shown in Fig. 5I, for the inner wheel external tooth waist 416 on the right side of the inner wheel external tooth 400 and the outer wheel internal tooth waist 314 on the right side of the outer wheel internal tooth 300, as the inner wheel continues to eccentrically rotate clockwise in the outer wheel 102, the engagement section 336 and the engagement section 446 are completely disengaged (not in contact).

In this way, it can be seen from the process of engagement described above, during the process form the start of engagement to the fully engaged state, both the projections, in the radial cross-section, of the contact area of the contact portion between the inner wheel external tooth waist 414 on the left side of the inner wheel external tooth 400 and the outer wheel internal tooth waist 316 on the left side of the outer wheel internal tooth 300 and the contact area of the contact portion between the inner wheel external tooth waist 416 on the right side of the inner wheel external tooth 400 and the outer wheel internal tooth waist 314 on the right side of the outer wheel internal tooth 300 gradually increases (see Figs. 5A-5E) until the maximum value is reached in the fully engaged state (see Fig. 5E). During the process from the fully engaged state to the disengagement, both the projections, in the radial cross-section, of the contact area of the contact portion between the inner wheel external tooth waist 414 on the left side of the inner wheel external tooth 400 and the outer wheel internal tooth waist 316 on the left side of the outer wheel internal tooth 300 and the contact area of the contact portion between the inner wheel external tooth waist 416 on the right side of the inner wheel external tooth 400 and the outer wheel internal tooth waist 314 on the right side of the outer wheel internal tooth 300 gradually decrease from the maximum value (see Figs. 5E-5I).

Furthermore, in the process from the start of engagement to the fully engaged state and from the fully engaged state to the disengagement, the inner wheel external tooth waist 414 on the left side of the inner wheel external tooth 400 and the outer wheel internal tooth waist 316 on the left side of the outer wheel internal tooth 300, and the inner wheel external tooth waist 416 on the right side of the inner wheel external tooth 400 and the outer wheel internal tooth waist 314 on the right side of the outer wheel internal tooth 300 are all be configured such that the contact area of the contact portion gradually increases and then gradually decreases.

The surface contact in the present application means that when inner wheel external tooth 400 and the outer wheel internal tooth 300 are in the fully engaged state, in the radial cross-section of the inner wheel external tooth 400 and the outer wheel internal tooth 300, the length of the contact line between the inner wheel external tooth waist 414 and the outer wheel internal tooth waist 316 is at least greater than 1% of the length of the inner wheel external tooth waist 414, and the length of the contact line between the inner wheel external tooth waist 416 and the outer wheel internal tooth waist 314 is at least greater than 1% of the length of the inner wheel external tooth waist 416. In other words, the lengths of the engagement section 436 and the engagement section 446 of the inner wheel 121 are at least respectively greater than 1% of the lengths of the inner wheel external tooth waist 414 and the inner wheel external tooth waist 416.

Although Figs. 5A-5I only show the specific positional relationship between one inner wheel external tooth 400 and outer wheel internal tooth 300 from the non-engaged state to the fully engaged state and then to the non-engaged state, those skilled in the art could understood that when the inner wheel 121 eccentrically rotates 360° in the outer wheel 102, the inner wheel external teeth 400 in the inner wheel 121 can be sequentially engaged with the outer wheel internal teeth 300 in the outer wheel 102, and the process of engagement described above will occur when any of the inner wheel external teeth 400 in the inner wheel 121 is engaged with the outer wheel internal teeth 300.

In the conventional internal engagement transmission mechanism, the inner wheel external teeth and the outer wheel internal teeth usually use the engagement between the cycloid and the roller pin or between the involutes such that the line-contact engagement is formed between the inner wheel external teeth and the outer wheel internal teeth. The contact area of the line-contact engagement is very small, almost zero. When the inner wheel external teeth and the outer wheel internal teeth are in transmission, since the area of the line engagement is almost zero, the tooth surface stress generated is very large when the inner wheel external teeth are engaged with the outer wheel internal teeth. The extremely large stress will cause the surface of the gear to peel off, such that the inner wheel external teeth and the outer wheel internal teeth have short service life, and the transmission of the internal engagement transmission mechanism is not stable enough.

The surface engagement can be formed between the inner wheel external teeth and the outer wheel internal teeth in the internal engagement transmission mechanism 100 in the present application. The contact area of the surface engagement greatly exceeds the contact area of the line engagement in the conventional internal engagement transmission mechanism. As an example, in the radial cross-section of the inner wheel external teeth and the outer wheel internal teeth, the length of the contact line of the surface engagement of the internal engagement transmission mechanism 100 in the present application is 0.1 mm. If the contact line of the line engagement in the conventional internal engagement transmission mechanism has a certain length which, for example, is set to 0.001 mm in the stress calculation (in the stress calculation, the contact area of tooth surface cannot be set to zero, otherwise the tooth surface stress will be infinitely great), and the line-contact length in the present application will be 100 times the contact length of the line engagement. In this way, the stress between the inner wheel external teeth and the outer wheel internal teeth of the surface engagement in the present application is 0.01 times the stress between the inner wheel external teeth and the outer wheel internal teeth of the conventional line engagement. This can greatly reduce the stress between the inner wheel external teeth and the outer wheel internal teeth so as to prevent the gear from wear, breakage, etc. This can also reduce the heat generated by the stress of the inner wheel external teeth and the outer wheel internal teeth, such that the internal engagement transmission mechanism 100 has better stability and longer service life. As an example, after the reducer manufactured by the internal engagement transmission mechanism in the present application operates at a speed of 1500 rpm under a rated load for 1000 hours, the lubricating oil in the reducer still maintains the original color, while the lubricating oil in the reducer will turn black after the reducer of the conventional internal engagement transmission mechanism operates under the same operating conditions. This indicates that compared with the engagement transmission between the cycloid and the roller pin or between the involutes in the prior art, the surface-contact engagement between the inner wheel external teeth and the outer wheel internal teeth in the present application has small tooth surface stress and generates small heat and wear.

It should be noted that the feature "overlapped" in the description of "the engagement portion of the outer wheel internal tooth waist and the engagement portion of the inner wheel external tooth waist being curved surfaces which have the same shape and are overlapped" in the present application includes both complete overlapping (i.e., the engagement portion and the engagement portion being overlapped 100%) and general overlapping. The difference between the general overlapping and the complete overlapping is that the general overlapping is caused by accuracy errors caused by manufacturing, processing, assembly, etc. Those skilled in the art could understand that such accuracy errors caused by manufacturing, processing, assembly, etc. will not affect the surface contact formed between the engagement portions, and such accuracy errors will not affect the technical effects of the internal engagement transmission mechanism in the present application described above.

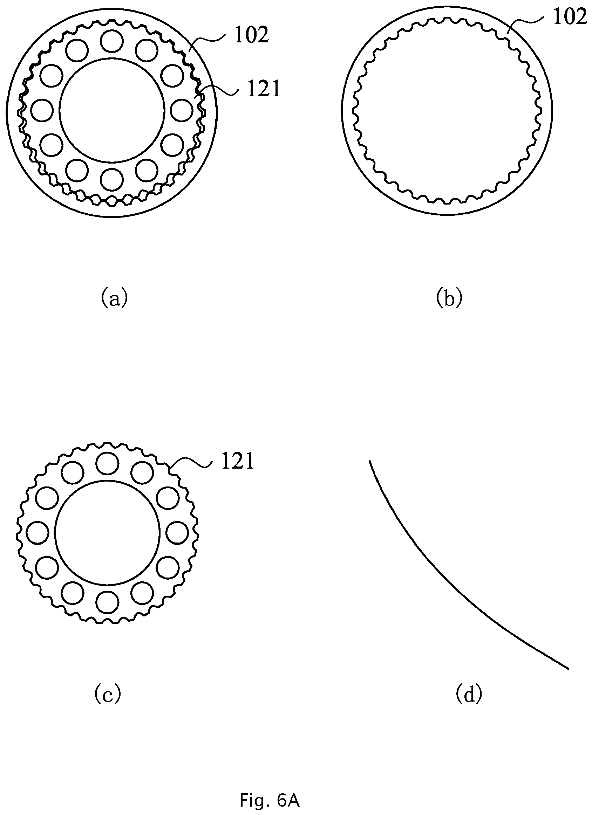

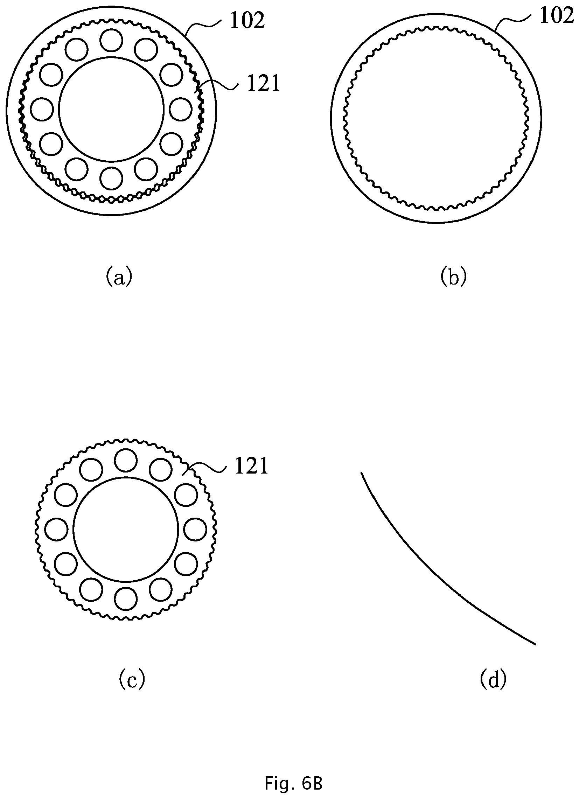

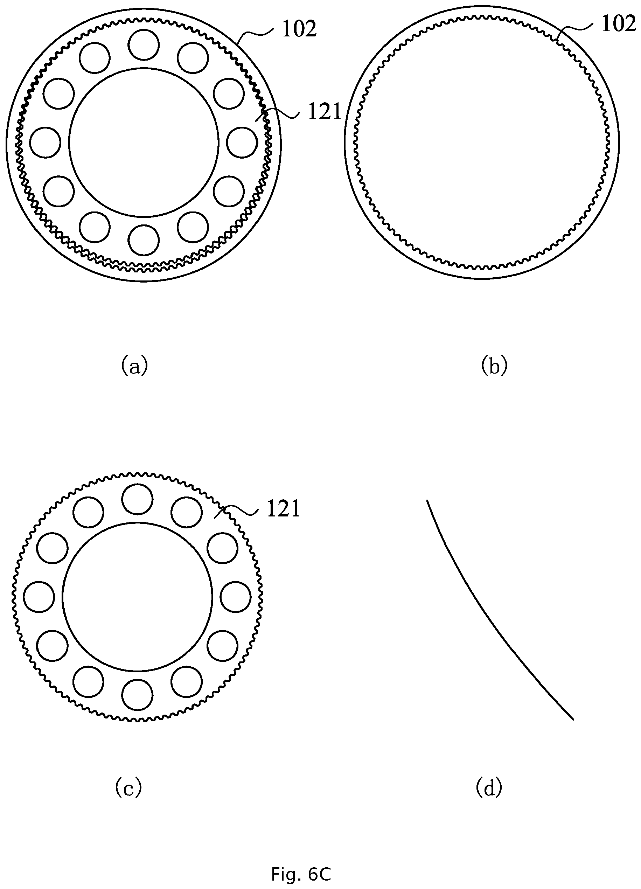

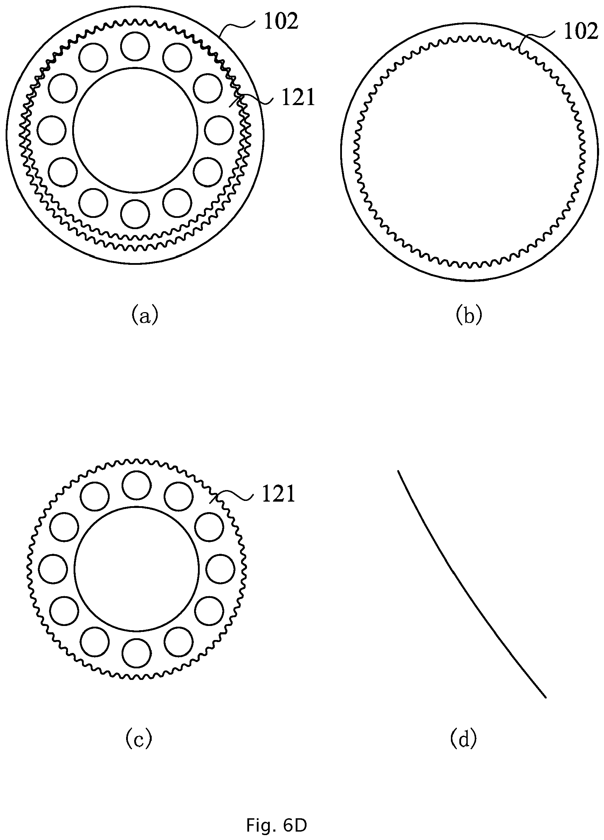

Fig. 6A is an enlarged view of a first specific product example of the outer wheel 102 and the inner wheel 121 shown in Fig. 2; Fig. 6B is an enlarged view of a second specific product example of the outer wheel 102 and the inner wheel 121 shown in Fig. 2; Fig. 6C is an enlarged view of a third specific product example of the outer wheel 102 and the inner wheel 121 shown in Fig. 2; and Fig. 6D is an enlarged view of a fourth specific product example of the outer wheel 102 and the inner wheel 121 shown in Fig. 2. Fig. (a) shows the mating state of the outer wheel 102 and the inner wheel 121, Fig. (b) shows the outer wheel 102, Fig. (c) shows the inner wheel 121, and Fig. (d) shows the enlarged view of the engagement section 336 of the outer wheel 102 in the radial cross-section.

In Fig. 6A, Figs. (a) to (c) show the first specific example of the outer wheel 102 and the inner wheel 121 shown in Fig. 2 depicted in enlarged views in the scale of 1 : 30. In the first specific example, the number of teeth of the outer wheel 102 is 36, and the number of teeth of the inner wheel 121 is 35, i.e. the difference of the number of teeth of the outer wheel 102 and the inner wheel 121 is 1 (i.e., one-tooth difference). The eccentricity e between the outer wheel 102 and the inner wheel 121 is 2 mm. The modulus of teeth is 2.4 mm. The tooth top height of the inner wheel external teeth 400 and the outer wheel internal teeth 300 is 2.4 mm. Fig. (d) shows a specific curve of the engagement section 336 of the outer wheel 102 in the radial cross-section depicted in the scale of 1 : 1500.

In Fig. 6B, Figs. (a) to (c) show the second specific example of the outer wheel 102 and the inner wheel 121 shown in Fig. 2 depicted in enlarged views in the scale of 1 : 30. In the second specific example, the number of teeth of the outer wheel 102 is 60, and the number of teeth of the inner wheel 121 is 59, i.e. the difference of the number of teeth of the outer wheel 102 and the inner wheel 121 is 1 (i.e., one-tooth difference). The eccentricity e between the outer wheel 102 and the inner wheel 121 is 1.2mm. The modulus of teeth is 1.4mm. The tooth top height of the inner wheel external teeth 400 and the outer wheel internal teeth 300 is 1.5mm. Fig. (d) shows a specific curve of the engagement section 336 of the outer wheel 102 in the radial cross-section depicted in the scale of 1 : 2400.

In Fig. 6C, Figs. (a) to (c) show the third specific example of the outer wheel 102 and the inner wheel 121 shown in Fig. 2 depicted in enlarged views in the scale of 1 : 30. In the third specific example, the number of teeth of the outer wheel 102 is 100, and the number of teeth of the inner wheel 121 is 98, i.e. the difference of the number of teeth of the outer wheel 102 and the inner wheel 121 is 2 (i.e., two-teeth difference). The eccentricity e between the outer wheel 102 and the inner wheel 121 is 2.0mm. The modulus of teeth is 2.0mm. The tooth top height of the inner wheel external teeth 400 and the outer wheel internal teeth 300 is 2.0mm. Fig. (d) shows a specific curve of the engagement section 336 of the outer wheel 102 in the radial cross-section depicted in the scale of 1 : 3000.

In Fig. 6D, Figs. (a) to (c) show the fourth specific example of the outer wheel 102 and the inner wheel 121 shown in Fig. 2 depicted in enlarged views in the scale of 1 : 50. In the fourth specific example, the number of teeth of the outer wheel 102 is 72, and the number of teeth of the inner wheel 121 is 69, i.e. the difference of the number of teeth of the outer wheel 102 and the inner wheel 121 is 3 (i.e., three-teeth difference). The eccentricity e between the outer wheel 102 and the inner wheel 121 is 2.3mm. The modulus of teeth is 1.0mm. The tooth top height of the inner wheel external teeth 400 and the outer wheel internal teeth 300 is 0.6mm. Fig. (d) shows a specific curve of the engagement section 336 of the outer wheel 102 in the radial cross-section depicted in the scale of 1 : 4000.

Although only some features of the present application are illustrated and described herein, a person skilled in the art may make various improvements and changes.

## Claims

1. An internal engagement transmission mechanism (100), comprising:
an outer wheel (102), wherein a first number of outer wheel internal teeth (300) are provided on an inner edge of the outer wheel (102), each of the outer wheel internal teeth (300) comprises an outer wheel internal tooth top (302) and outer wheel internal tooth waists (314, 316) symmetrical with respect to the outer wheel internal tooth top (302), each of the outer wheel internal tooth waists (314, 316) comprises an engagement portion (336, 346); and
an inner wheel (121, 122, 123, 124), wherein a second number of inner wheel external teeth (400) are provided on an outer edge of the inner wheel (121, 122, 123, 124), each of the inner wheel external teeth (400) comprises an inner wheel external tooth top (402) and inner wheel external tooth waists (414,416) symmetrical with respect to the inner wheel external tooth top (402), each of the inner wheel external tooth waists (414,416) comprises an engagement portion(436, 446), the first number being greater than the second number;
wherein the inner wheel (121, 122, 123, 124) is arranged inside the outer wheel (102) and eccentrically rotates with respect to the outer wheel (102), the inner wheel (121, 122, 123, 124) and the outer wheel (102) form internal engagement transmission via the engagement of the engagement portion (436, 446) of the inner wheel external tooth waist (414,416) and the engagement portion (336, 346) of the outer wheel internal tooth waist (314, 316);
**characterized in that** the engagement portion (336, 346) of the outer wheel internal tooth waist (314, 316) and the engagement portion (436, 446) of the inner wheel external tooth waist (414,416) are curved surfaces which have the same shape and are overlapped, and the outer wheel internal tooth waist (314, 316) and the inner wheel external tooth waist (414,416) are designed such that when the outer wheel (102) and the inner wheel (121, 122, 123, 124) are in engagement transmission, at least one inner wheel external tooth (400) in the inner wheel external teeth (400) is capable of engaging with the outer wheel internal teeth (300), and for each of the inner wheel external teeth (400) engaged with the outer wheel internal teeth (300), as the inner wheel eccentrically rotates, the engagement portion (436, 446) of at least one of the inner wheel external tooth waists (414,416) is capable of forming surface-contact engagement with the engagement portion (336, 346) of the outer wheel internal tooth waist (314, 316), and the engagement portion(436, 446) of the at least one of the inner wheel external tooth waists (414, 416) and the engagement portion (336, 346) of the outer wheel internal tooth waist (314, 316) are overlapped in a fully engaged state.

2. The internal engagement transmission mechanism (100) of claim 1, wherein the shape of the curved surface of the engagement portion (336,346) of the outer wheel internal tooth waist (314, 316) is complementary with the shape of the curved surface of the engagement portion (436,446) of the inner wheel external tooth waist (414, 416).

3. The internal engagement transmission mechanism (100) of claim 1, wherein
the outer wheel internal tooth waist (314, 316) and the inner wheel external tooth waist (414,416) are configured such that as the inner wheel (121, 122, 123, 124) eccentrically rotates, the contact area formed when the inner wheel external tooth waist (414,416) comes into contact with the outer wheel internal tooth waist (314, 316) is variable.

4. The internal engagement transmission mechanism (100) of claim 3, wherein
the outer wheel internal tooth waist (314, 316) and the inner wheel external tooth waist (414,416) are configured such that as the inner wheel (121, 122, 123, 124) eccentrically rotates, the contact area formed when the inner wheel external tooth waist (414,416) comes into contact with the outer wheel internal tooth waist (314, 316) is capable of gradually increasing and then gradually decreasing to an extent that the inner wheel external tooth waist (414,416) and the outer wheel internal tooth waist (314, 316) separate from each other.

5. The internal engagement transmission mechanism (100) of claim 4, wherein
the outer wheel internal tooth waist (314, 316) and the inner wheel external tooth waist (414,416) are designed such that for each of the inner wheel external teeth (400) engaged with the outer wheel internal teeth (300), two inner wheel external tooth waists (414,416) of the inner wheel external tooth (400) are both engaged with the outer wheel internal tooth waists (314, 316) of the outer wheel internal tooth (300), and the engagement is surface-contact engagement.

6. The internal engagement transmission mechanism (100) of claim 5, wherein
the outer wheel internal tooth waist (314, 316) and the inner wheel external tooth waist (414,416) are designed such that for each of the inner wheel external teeth (400) engaged with the outer wheel internal teeth (300), the engagement portion (436, 446) of the inner wheel external tooth waist (414,416) and the engagement portion (336, 346) of the outer wheel internal tooth waist (314, 316) are in a partial engaged state and a fully engaged state;
when the engagement portion (436, 446) of the inner wheel external tooth waist (414,416) and the engagement portion (336, 346) of the outer wheel internal tooth waist (314, 316) are in the partial engaged state, part of the engagement portion (436, 446) of the inner wheel external tooth waist (414,416) is capable of forming surface-contact engagement with a part of the engagement portion (336, 346) of the outer wheel internal tooth waist (314, 316);
when the engagement portion (436, 446) of the inner wheel external tooth waist (414,416) and the engagement portion (336, 346) of the outer wheel internal tooth waist (314, 316) are in the fully engaged state, the engagement portion (336, 346) of the outer wheel internal tooth waist (314, 316) is capable of having the maximum contact area with the engagement portion (436, 446) of the inner wheel external tooth waist (414,416);
wherein when the engagement portion (436, 446) of the inner wheel external tooth waist (414,416) and the engagement portion (336, 346) of the outer wheel internal tooth waist (314, 316) begin to engage or disengage, the inner wheel external tooth waist (414,416) and the outer wheel internal tooth waist (314, 316) are in the partial engaged state.

7. The internal engagement transmission mechanism (100) of claim 6, wherein
the outer wheel internal tooth waist (314, 316) and the inner wheel external tooth waist (414,416) are configured such that:
when the engagement portion (436, 446) of the inner wheel external tooth waist (414,416) and the engagement portion (336, 346) of the outer wheel internal tooth waist (314, 316) begin to engage to the fully engaged state, the contact area of the engagement portion (436, 446) of the inner wheel external tooth waist (414,416) and the engagement portion (336, 346) of the outer wheel internal tooth waist (314, 316) gradually increases; and
when the engagement portion (436, 446) of the inner wheel external tooth waist (414,416) and the engagement portion (336, 346) of the outer wheel internal tooth waist (314, 316) are disengaged from the fully engaged state, the contact area of the engagement portion (436, 446) of the inner wheel external tooth waist (414,416) and the engagement portion (336, 346) of the outer wheel internal tooth waist (314, 316) gradually decreases.

8. The internal engagement transmission mechanism (100) of claim 7, wherein
the engagement portions (436, 446) of the inner wheel external tooth waists (414,416) on two sides of the inner wheel external tooth top (402) are symmetrically arranged with respect to an inner wheel external tooth center line (Y);
the engagement portion (336, 346) of the outer wheel internal tooth waist (314, 316) of the outer wheel internal teeth (300) and the engagement portion(336, 346) of the outer wheel internal tooth waist (314, 316) of the adjacent outer wheel internal teeth (300) are symmetrically arranged with respect to an outer wheel internal tooth center line (X); and
when the inner wheel (121, 122, 123, 124) is engaged with the outer wheel (102), and the inner wheel external tooth center line (Y) coincides with the outer wheel internal tooth center line (X), the inner wheel external teeth (400) and the outer wheel internal teeth (300) are in the fully engaged state.

9. The internal engagement transmission mechanism (100) of claim 7, wherein
the outer wheel internal teeth (300) and the inner wheel external teeth (400) are all spur gears; and
wherein in the radial cross-section of the inner wheel (121, 122, 123, 124) and the outer wheel (102), the outer wheel internal tooth waist (314, 316) and the inner wheel external tooth waist (414,416) are continuous and smooth curves, and direction of curve of the engagement portion (336, 346) of the outer wheel internal tooth waist (314, 316) protrudes toward the outside of the outer wheel internal teeth (300), and direction of curve of the engagement portion (436, 446) of the inner wheel external tooth waist (414,416) recesses toward the inside of the inner wheel external teeth (400).

10. The internal engagement transmission mechanism (100) of claim 1, wherein
the difference between the first number and the second number is 1.

11. The internal engagement transmission mechanism (100) of claim 8, wherein
when the engagement portion (436, 446) of the inner wheel external tooth waist (414,416) and the engagement portion (336, 346) of the outer wheel internal tooth waist (314, 316) are in the fully engaged state, in the transverse cross-section of the outer wheel internal teeth (300) and the inner wheel external teeth (400), the length of the contact line of the engagement portion of the inner wheel external tooth waist (414,416) and the engagement portion (336, 346) of the outer wheel internal tooth waist (314, 316) is greater than 1% of the length of the inner wheel external tooth waist (414,416).

12. The internal engagement transmission mechanism (100) of claim 1, wherein two adjacent outer wheel internal teeth (300) are connected to each other via an outer wheel internal tooth base (322),
wherein the outer wheel internal tooth waist (314,316) comprises a first transition section (332,342), which connects the engagement section (336,346) to the outer wheel internal tooth base (322), and a second transition section (334,344), which connects the engagement section (336,346) to the outer wheel internal tooth top (302),
wherein the outer wheel internal tooth waist (314,316) is configured such that, when the outer wheel (102) is engaged with the inner wheel (121), the first transition section (332,342) and
the second transition section (334,344) do not contact with the inner wheel (121).

## Patentansprüche

1. Inneneingriffsübertragungsmechanismus (100), umfassend:
ein Außenrad (102), wobei eine erste Anzahl von Außenrad-Innenzähnen (300) an einer Innenkante des Außenrads (102) vorgesehen ist, wobei jeder der Außenrad-Innenzähne (300) eine Außenrad-Innenzahnspitze (302) und Außenrad-Innenzahntaschen (314, 316) symmetrisch in Bezug auf die Außenrad-Innenzahnspitze (302) umfasst, wobei jede der Außenrad-Innenzahntaschen (314, 316) einen Eingriffsabschnitt (336, 346) umfasst; und
ein Innenrad (121, 122, 123, 124), wobei eine zweite Anzahl von Innenradaußenzähnen (400) an einer Außenkante des Innenrads (121, 122, 123, 124) vorgesehen ist, wobei jeder der Innenradaußenzähne (400) eine Innenradaußenzahnspitze (402) und Innenradaußenzahntaschen (414, 416) aufweist, die symmetrisch in Bezug auf die Innenradaußenzahnspitze (402) sind, wobei jede der Innenradaußenzahntaschen (414, 416) einen Eingriffsabschnitt (436, 446) aufweist, wobei die erste Zahl größer als die zweite Zahl ist; wobei
das Innenrad (121, 122, 123, 124) innerhalb des Außenrads (102) angeordnet ist und sich in Bezug auf das Außenrad (102) exzentrisch dreht, das Innenrad (121, 122, 123, 124) und das Außenrad (102) eine innere Eingriffsübertragung über den Eingriff des Eingriffsabschnitts (436, 446) der Innenrad-Außenzahntaille (414, 416) und des Eingriffsabschnitts (336, 346) der Außenrad-Innenzahntaille (314, 316) bilden
**dadurch gekennzeichnet, dass** der Eingriffsabschnitt (336, 346) der Außenrad-Innenzahntaille (314, 316) und der Eingriffsabschnitt (436, 446) der Innenrad-Außenzahntaille (414, 416) gekrümmte Flächen sind, die die gleiche Form haben und sich überlappen, und die Außenrad-Innenzahntaille (314, 316) und die Innenrad-Außenzahntaille (414, 416) sich überlappen, 316) und die Innenradaußenzahntaille (414, 416) so gestaltet sind, dass, wenn das Außenrad (102) und das Innenrad (121, 122, 123, 124) im Eingriffsgetriebe sind, mindestens ein Innenradaußenzahn (400) in der Innenradaußenverzahnung (400) in der Lage ist, mit der Außenradinnenverzahnung (300) in Eingriff zu kommen, und für jeden der Innenradaußenzähne (400), die mit den Außenradinnenzähnen (300) in Eingriff stehen, wenn sich das Innenrad exzentrisch dreht, der Eingriffsabschnitt (436, 446) von mindestens einer der Innenradaußenzahnhälften (414, 416) in der Lage ist, einen Oberflächenkontakteingriff mit dem Eingriffsabschnitt (336, 346) der Außenrad-Innenzahntaille (314, 316) zu bilden, und die Eingriffsabschnitte (436, 446) der mindestens einen Außenrad-Innenzahntaille (314, 316) in einem vollständig in Eingriff stehenden Zustand überlappt werden.

2. Inneneingriffsübertragungsmechanismus (100) nach Anspruch 1, wobei die Form der gekrümmten Oberfläche des Eingriffsabschnitts (336, 346) der Außenrad-Innenzahntaille (314, 316) komplementär zu der Form der gekrümmten Oberfläche des Eingriffsabschnitts (436, 446) der Innenrad-Außenverzahnung (414, 416) ist.

3. Inneneingriffsübertragungsmechanismus (100) nach Anspruch 1, wobei die Außenrad-Innenzahntaille (314, 316) und die Innenrad-Außenzahntaille (414, 416) so konfiguriert sind, dass, wenn sich das Innenrad (121, 122, 123, 124) exzentrisch dreht, die Kontaktfläche, die gebildet wird, wenn die Innenrad-Außenzahntaille (414, 416) in Kontakt mit der Außenrad-Innenzahntaille (314, 316) kommt, variabel ist.

4. Inneneingriffsübertragungsmechanismus (100) nach Anspruch 3, wobei die Außenrad-Innenzahntaille (314, 316) und die Innenrad-Außenzahntaille (414, 416) so konfiguriert sind, dass, wenn sich das Innenrad (121, 122, 123, 124) exzentrisch dreht, die Kontaktfläche, die gebildet wird, wenn die Innenrad-Außenzahntaille (414, 416) mit der Innenverzahnung (314, 316) des Außenrads in Berührung kommt, allmählich vergrößert und dann allmählich verkleinert werden kann, so dass sich die Außenverzahnung (414, 416) des Innenrads und die Innenverzahnung (314, 316) des Außenrads voneinander trennen.

5. Inneneingriffsübertragungsmechanismus (100) nach Anspruch 4, wobei die Außenrad-Innenzahntaille (314, 316) und die Innenrad-Außenzahntaille (414, 416) so gestaltet sind, dass für jeden der Innenrad-Außenzähne (400), der mit den Außenrad-Innenzähnen (300) in Eingriff steht, zwei Innenrad-Außenzahntaillen (414, 416) des Innenrad-Außenzahns (400) beide mit den Außenrad-Innenzahntaillen (314, 316) des Außenrad-Innenzahns (300) in Eingriff stehen, und der Eingriff ein Oberflächenkontakt-Eingriff ist.

6. Inneneingriffsübertragungsmechanismus (100) nach Anspruch 5, wobei die Außenrad-Innenzahntaille (314, 316) und die Innenrad-Außenzahntaille (414, 416) so gestaltet sind, dass für jeden der Innenrad-Außenzähne (400), die mit den Außenrad-Innenzähnen (300) in Eingriff stehen, der Eingriffsabschnitt (436, 446) der Innenrad-Außenzahntaille (414, 416) und der Eingriffsabschnitt (336, 346) der Außenrad-Innenzahntaille (314, 316) in einem teilweise in Eingriff stehenden Zustand und einem vollständig in Eingriff stehenden Zustand sind;
wenn der Eingriffsabschnitt (436, 446) der inneren Radaußenzahntaille (414, 416) und der Eingriffsabschnitt (336, 346) der äußeren Radinnenzahntaille (314, 316) in dem teilweisen Eingriffszustand sind, ist ein Teil des Eingriffsabschnitts (436, 446) der inneren Radaußenzahntaille (414, 416) in der Lage, einen Oberflächenkontakteingriff mit einem Teil des Eingriffsabschnitts (336, 346) der äußeren Radinnenzahntaille (314, 316) zu bilden;
wenn der Eingriffsabschnitt (436, 446) der inneren Radaußenzahntaille (414, 416) und der Eingriffsabschnitt (336, 346) der äußeren Radinnenzahntaille (314, 316) in dem vollständig in Eingriff befindlichen Zustand sind, ist der Eingriffsabschnitt (336, 346) der äußeren Radinnenzahntaille (314, 316) in der Lage, die maximale Kontaktfläche mit dem Eingriffsabschnitt (436, 446) der inneren Radaußenzahntaille (414, 416) zu haben;
wobei, wenn der Eingriffsabschnitt (436, 446) der inneren Radaußenzahntaille (414, 416) und der Eingriffsabschnitt (336, 346) der äußeren Radinnenzahntaille (314, 316) beginnen, ineinanderzugreifen oder sich zu lösen, sich die innere Radaußenzahntaille (414, 416) und die äußere Radinnenzahntaille (314, 316) in dem teilweisen Eingriffszustand befinden.

7. Inneneingriffsübertragungsmechanismus (100) nach Anspruch 6, wobei die Außenrad-Innenzahntaille (314, 316) und die Innenrad-Außenzahntaille (414, 416) so konfiguriert sind, dass wenn der Eingriffsabschnitt (436, 446) der inneren Radaußenzahntaille (414, 416) und der Eingriffsabschnitt (336, 346) der äußeren Radinnenzahntaille (314, 316) beginnen, in den vollständig eingerückten Zustand einzurücken, die Kontaktfläche des Eingriffsabschnitts (436, 446) der inneren Radaußenzahntaille (414, 416) und des Eingriffsabschnitts (336, 346) der äußeren Radinnenzahntaille (314, 316) allmählich zunimmt; und wenn der Eingriffsbereich (436, 446) der inneren Radaußenzahntaille (414, 416) und der Eingriffsbereich (336, 346) der äußeren Radinnenzahntaille (314, 316) aus dem vollständig in Eingriff befindlichen Zustand gelöst werden, nimmt die Kontaktfläche des Eingriffsbereichs (436, 446) der inneren Radaußenzahntaille (414, 416) und des Eingriffsbereichs (336, 346) der äußeren Radinnenzahntaille (314, 316) allmählich ab.

8. Inneneingriffsübertragungsmechanismus (100) nach Anspruch 7, wobei die Eingriffsabschnitte (436, 446) der Innenradaußenzahntaille (414, 416) und zwei Seiten der Innenradaußenzahnspitze (402) symmetrisch in Bezug auf eine Innenradaußenzahnmittellinie (Y) angeordnet sind;
der Eingriffsabschnitt (336, 346) der Außenrad-Innenzahntaille (314, 316) der Außenrad-Innenzähne (300) und der Eingriffsabschnitt (336, 346) der Außenrad-Innenzahntaille (314, 316) der benachbarten Außenrad-Innenzähne (300) in Bezug auf eine Außenrad-Innenzahn-Mittellinie (X) symmetrisch angeordnet sind; und wenn das Innenrad (121, 122, 123, 124) mit dem Außenrad (102) in Eingriff ist und die Innenradaußenzahn-Mittellinie (Y) mit der Außenradinnenzahn-Mittellinie (X) zusammenfällt, befinden sich die Innenradaußenzähne (400) und die Außenradinnenzähne (300) in dem vollständig in Eingriff stehenden Zustand.

9. Inneneingriffsübertragungsmechanismus (100) nach Anspruch 7, wobei die Außenrad-Innenverzahnung (300) und die Innenrad-Außenverzahnung (400) alle Stirnräder sind; und wobei im radialen Querschnitt des Innenrads (121, 122, 123, 124) und des Außenrads (102) die Außenrad-Innenzahntaille (314, 316) und die Innenrad-Außenzahntaille (414, 416) kontinuierliche und glatte Kurven sind und die Richtung der Kurve des Eingriffsabschnitts (336, 346) der Außenrad-Innenzahntaille (314, 316) in Richtung der Außenseite der Außenrad-Innenzähne (300) vorsteht und die Richtung der Kurve des Eingriffsabschnitts (436, 446) der Innenrad-Außenzahntaille (414, 416) in Richtung der Innenseite der Innenrad-Außenzähne (400) zurücktritt.

10. Inneneingriffsübertragungsmechanismus (100) nach Anspruch 1, wobei die Differenz zwischen der ersten Zahl und der zweiten Zahl 1 ist.

11. Inneneingriffsübertragungsmechanismus (100) nach Anspruch 8, wobei, wenn der Eingriffsabschnitt (436, 446) der Innenrad-Außenzahntaille (414, 416) und der Eingriffsabschnitt (336, 346) der Außenrad-Innenzahntaille (314, 316) im Querschnitt der Außenrad-Innenverzahnung (300) und der Innenrad-Außenverzahnung (400) im vollständig eingerückten Zustand sind, die Länge der Kontaktlinie des Eingriffsabschnitts der Innenrad-Außenzahntaille (414, 416) und die Eingriffslänge der Innenrad-Außenzahntaille (314, 316) die Länge der Kontaktlinie der Innenrad-Außenzahntaille (414, 416) ist.

12. Inneneingriffsübertragungsmechanismus (100) nach Anspruch 1, wobei zwei benachbarte Außenrad-Innenzähne (300) über eine Außenrad-Innenzahnbasis (322) miteinander verbunden sind, wobei die Außenrad-Innenzahntaille (314, 316) einen ersten Übergangsabschnitt (332, 342), der den Eingriffsabschnitt (336, 346) mit der Außenrad-Innenzahnbasis (322) verbindet, und einen zweiten Übergangsabschnitt (332, 342) umfasst, der den Eingriffsabschnitt (336, 346) mit der Außenrad-Innenzahnbasis (322) verbindet. (322) verbindet, und einen zweiten Übergangsabschnitt (334, 344), der den Eingriffsabschnitt (336, 346) mit dem Außenrad-Innenzahnkopf (302) verbindet, wobei die Außenrad-Innenzahntaille (314, 316) so konfiguriert ist, dass, wenn das Außenrad (102) mit dem Innenrad (121) in Eingriff ist, der erste Übergangsabschnitt (332, 342) und der zweite Übergangsabschnitt (334, 344) das Innenrad (121) nicht berühren.

## Revendications

1. Mécanisme de transmission à engagement interne (100), comprenant :
une roue extérieure (102), où un premier nombre de dents internes de la roue extérieure (300) sont prévues sur un bord intérieur de la roue extérieure (102), chacune des dents internes de la roue extérieure (300) comprend un sommet de dent interne de la roue extérieure (302) et des cambrures de dent interne de la roue extérieure (314, 316) symétriques par rapport au sommet de dent interne de la roue extérieure (302), chacune des cambrures de dent interne de la roue extérieure (314, 316) comprend une partie d'engagement (336, 346) ; et
une roue intérieure (121, 122, 123, 124), où un deuxième nombre de dents externes de la roue intérieure (400) sont prévues sur un bord extérieur de la roue intérieure (121, 122, 123, 124), chacune des dents externes de la roue intérieure (400) comprend un sommet de dent externe de la roue intérieure (402) et des cambrures de dent externe de la roue intérieure (414, 416) symétriques par rapport au sommet de dent externe de la roue intérieure (402), chacune des cambrures de dent externe de la roue intérieure (414, 416) comprend une partie d'engagement (436, 446), le premier nombre étant supérieur au deuxième nombre ;
où la roue intérieure (121, 122, 123, 124) est disposée à l'intérieur de la roue extérieure (102) et tourne de manière excentrique par rapport à la roue extérieure (102), la roue intérieure (121, 122, 123, 124) et la roue extérieure (102) forment une transmission à engagement interne via l'engagement de la partie d'engagement (436, 446) de la cambrure de dent externe de la roue intérieure (414, 416) et de la partie d'engagement (336, 346) de la cambrure de dent interne de la roue extérieure (314, 316) ;
**caractérisé en ce que** la partie d'engagement (336, 346) de la cambrure de dent interne de la roue extérieure (314, 316) et la partie d'engagement (436, 446) de la cambrure de dent externe de la roue intérieure (414, 416) sont des surfaces courbes ayant la même forme et sont superposées, et les cambrures de dent interne de la roue extérieure (314, 316) et les cambrures de dent externe de la roue intérieure (414, 416) sont conçues de telle sorte que lorsque la roue extérieure (102) et la roue intérieure (121, 122, 123, 124) sont en engagement de transmission, au moins une dent externe de la roue intérieure (400) parmi les dents externes de la roue intérieure (400) est capable de s'engager avec les dents internes de la roue extérieure (300), et pour chacune des dents externes de la roue intérieure (400) engagées avec les dents internes de la roue extérieure (300), à mesure que la roue intérieure tourne de manière excentrique, la partie d'engagement (436, 446) d'au moins une des cambrures de dent externe de la roue intérieure (414, 416) est capable de former un engagement de contact en surface avec la partie d'engagement (336, 346) de la cambrure de dent interne de la roue extérieure (314, 316), et la partie d'engagement (436, 446) d'au moins une des cambrures de dent externe de la roue intérieure (414, 416) et la partie d'engagement (336, 346) de la cambrure de dent interne de la roue extérieure (314, 316) sont superposées dans un état de plein engagement.

2. Mécanisme de transmission à engagement interne (100) selon la revendication 1, où la forme de la surface courbe de la partie d'engagement (336, 346) de la cambrure de dent interne de la roue extérieure (314, 316) est complémentaire avec la forme de la surface courbe de la partie d'engagement (436, 446) de la cambrure de dent externe de la roue intérieure (414, 416).

3. Mécanisme de transmission à engagement interne (100) selon la revendication 1, où
les cambrures de dent interne de la roue extérieure (314, 316) et les cambrures de dent externe de la roue intérieure (414, 416) sont configurées de telle sorte qu'à mesure que la roue intérieure (121, 122, 123, 124) tourne de manière excentrique, la zone de contact formée lorsque la cambrure de dent externe de la roue intérieure (414, 416) entre en contact avec la cambrure de dent interne de la roue extérieure (314, 316) est variable.

4. Mécanisme de transmission à engagement interne (100) selon la revendication 3, où
les cambrures de dent interne de la roue extérieure (314, 316) et les cambrures de dent externe de la roue intérieure (414, 416) sont configurées de telle sorte qu'à mesure que la roue intérieure (121, 122, 123, 124) tourne de manière excentrique, la zone de contact formée lorsque la cambrure de dent externe de la roue intérieure (414, 416) entre en contact avec la cambrure de dent interne de la roue extérieure (314, 316) est capable d'augmenter progressivement puis de diminuer progressivement jusqu'à ce que la cambrure de dent externe de la roue intérieure (414, 416) et la cambrure de dent interne de la roue extérieure (314, 316) se séparent l'une de l'autre.

5. Mécanisme de transmission à engagement interne (100) selon la revendication 4, où
les cambrures de dent interne de la roue extérieure (314, 316) et les cambrures de dent externe de la roue intérieure (414, 416) sont conçues de telle sorte que pour chacune des dents externes de la roue intérieure (400) engagées avec les dents internes de la roue extérieure (300), les deux cambrures de dent externe (414, 416) de la dent externe de la roue intérieure (400) sont toutes deux engagées avec les cambrures de dent interne (314, 316) des dents internes de la roue extérieure (300), et l'engagement est un engagement de contact en surface.

6. Mécanisme de transmission à engagement interne (100) selon la revendication 5, où
les cambrures de dent interne de la roue extérieure (314, 316) et les cambrures de dent externe de la roue intérieure (414, 416) sont conçues de telle sorte que pour chacune des dents externes de la roue intérieure (400) engagées avec les dents internes de la roue extérieure (300), la partie d'engagement (436, 446) de la cambrure de dent externe de la roue intérieure (414, 416) et la partie d'engagement (336, 346) de la cambrure de dent interne de la roue extérieure (314, 316) sont dans un état d'engagement partiel et un état de plein engagement ;
lorsque la partie d'engagement (436, 446) de la cambrure de dent externe de la roue intérieure (414, 416) et la partie d'engagement (336, 346) de la cambrure de dent interne de la roue extérieure (314, 316) sont dans l'état d'engagement partiel, une partie de la partie d'engagement (436, 446) de la cambrure de dent externe de la roue intérieure (414, 416) est capable de former un engagement de contact en surface avec une partie de la partie d'engagement (336, 346) de la cambrure de dent interne de la roue extérieure (314, 316) ;
lorsque la partie d'engagement (436, 446) de la cambrure de dent externe de la roue intérieure (414, 416) et la partie d'engagement (336, 346) de la cambrure de dent interne de la roue extérieure (314, 316) sont dans l'état de plein engagement, la partie d'engagement (336, 346) de la cambrure de dent interne de la roue extérieure (314, 316) est capable d'avoir la zone de contact maximale avec la partie d'engagement (436, 446) de la cambrure de dent externe de la roue intérieure (414, 416) ;
où lorsque la partie d'engagement (436, 446) de la cambrure de dent externe de la roue intérieure (414, 416) et la partie d'engagement (336, 346) de la cambrure de dent interne de la roue extérieure (314, 316) commencent à s'engager ou à se désengager, la cambrure de dent externe de la roue intérieure (414, 416) et la cambrure de dent interne de la roue extérieure (314, 316) sont dans l'état d'engagement partiel.

7. Mécanisme de transmission à engagement interne (100) selon la revendication 6, où
les cambrures de dent interne de la roue extérieure (314, 316) et les cambrures de dent externe de la roue intérieure (414, 416) sont configurées de telle sorte que :
lorsque la partie d'engagement (436, 446) de la cambrure de dent externe de la roue intérieure (414, 416) et la partie d'engagement (336, 346) de la cambrure de dent interne de la roue extérieure (314, 316) commencent à s'engager jusqu'à l'état de plein engagement, la zone de contact de la partie d'engagement (436, 446) de la cambrure de dent externe de la roue intérieure (414, 416) et de la partie d'engagement (336, 346) de la cambrure de dent interne de la roue extérieure (314, 316) augmente progressivement ; et
lorsque la partie d'engagement (436, 446) de la cambrure de dent externe de la roue intérieure (414, 416) et la partie d'engagement (336, 346) de la cambrure de dent interne de la roue extérieure (314, 316) se désengagent de l'état de plein engagement, la zone de contact de la partie d'engagement (436, 446) de la cambrure de dent externe de la roue intérieure (414, 416) et de la partie d'engagement (336, 346) de la cambrure de dent interne de la roue extérieure (314, 316) diminue progressivement.

8. Mécanisme de transmission à engagement interne (100) selon la revendication 7, où
les parties d'engagement (436, 446) des cambrures de dent externe de la roue intérieure (414, 416) des deux côtés du sommet de dent externe de la roue intérieure (402) sont disposées de manière symétrique par rapport à une ligne centrale de dent externe de la roue intérieure (Y) ;
les parties d'engagement (336, 346) de la cambrure de dent interne de la roue extérieure (314, 316) des dents internes de la roue extérieure (300) et les parties d'engagement (336, 346) de la cambrure de dent interne de la roue extérieure (314, 316) des dents internes adjacentes de la roue extérieure (300) sont disposées de manière symétrique par rapport à une ligne centrale de dent interne de la roue extérieure (X) ; et
lorsque la roue intérieure (121, 122, 123, 124) est engagée avec la roue extérieure (102), et que la ligne centrale de dent externe de la roue intérieure (Y) coïncide avec la ligne centrale de dent interne de la roue extérieure (X), les dents externes de la roue intérieure (400) et les dents internes de la roue extérieure (300) sont dans l'état de plein engagement.

9. Mécanisme de transmission à engagement interne (100) selon la revendication 7, où
les dents internes de la roue extérieure (300) et les dents externes de la roue intérieure (400) sont toutes des engrenages droits ; et
où, en section radiale de la roue intérieure (121, 122, 123, 124) et de la roue extérieure (102), la cambrure de dent interne de la roue extérieure (314, 316) et la cambrure de dent externe de la roue intérieure (414, 416) sont des courbes continues et lisses, et la direction de la courbe de la partie d'engagement (336, 346) de la cambrure de dent interne de la roue extérieure (314, 316) fait saillie vers l'extérieur des dents internes de la roue extérieure (300), et la direction de la courbe de la partie d'engagement (436, 446) de la cambrure de dent externe de la roue intérieure (414, 416) se creuse vers l'intérieur des dents externes de la roue intérieure (400).

10. Mécanisme de transmission à engagement interne (100) selon la revendication 1, où
la différence entre le premier nombre et le deuxième nombre est de 1.

11. Mécanisme de transmission à engagement interne (100) selon la revendication 8, où
lorsque la partie d'engagement (436, 446) de la cambrure de dent externe de la roue intérieure (414, 416) et la partie d'engagement (336, 346) de la cambrure de dent interne de la roue extérieure (314, 316) sont dans l'état de plein engagement, en section transversale des dents internes de la roue extérieure (300) et des dents externes de la roue intérieure (400), la longueur de la ligne de contact de la partie d'engagement de la cambrure de dent externe de la roue intérieure (414, 416) et de la partie d'engagement (336, 346) de la cambrure de dent interne de la roue extérieure (314, 316) est supérieure à 1 % de la longueur de la cambrure de dent externe de la roue intérieure (414, 416).

12. Mécanisme de transmission à engagement interne (100) selon la revendication 1, où deux dents internes adjacentes de la roue extérieure (300) sont reliées l'une à l'autre via une base de dent interne de la roue extérieure (322),
où la cambrure de dent interne de la roue extérieure (314, 316) comprend une première section de transition (332, 342), qui relie la section d'engagement (336, 346) à la base de dent interne de la roue extérieure (322), et une deuxième section de transition (334, 344), qui relie la section d'engagement (336, 346) au sommet de dent interne de la roue extérieure (302),
où la cambrure de dent interne de la roue extérieure (314, 316) est configurée de telle sorte que, lorsque la roue extérieure (102) est engagée avec la roue intérieure (121), la première section de transition (332, 342) et la deuxième section de transition (334, 344) ne sont pas en contact avec la roue intérieure (121).
